# EUROPEAN PATENT SPECIFICATION

(11) **EP 4 363 529 B1**
(45) Date of publication and mention of the grant of the patent: **18.11.2026**
(21) Application number: 22738621.6
(22) Date of filing: 27.06.2022
(51) Int. Cl.: C10G 9/36, B01D 1/00, C10G 9/24

(54) **SYSTEMS FOR VAPORIZING HYDROCARBONS USING ELECTRICALLY-POWERED HEATING**
SYSTEME ZUM VERDAMPFEN VON KOHLENWASSERSTOFFEN UNTER VERWENDUNG EINER ELEKTRISCH BETRIEBENEN HEIZUNG
SYSTÈMES DE VAPORISATION D'HYDROCARBURES PAR CHAUFFAGE ÉLECTRIQUE

(30) Priority: 02.07.2021 EP 21183461
(43) Date of publication of application: 08.05.2024
(73) Proprietor: SABIC Global Technologies B.V., 4612 PX Bergen op Zoom (NL)
(72) Inventor: OPRINS, Arno Johannes Maria, Bangalore 562125 (IN); HUCKMAN, Michael Edward, Bengaluru 562125 (IN); SCHROER, Joseph William, Bengaluru 562125 (IN); NAIR, Balamurali Krishna, Bengaluru 562125 (IN)
(74) Representative: Algemeen Octrooi- en Merkenbureau B.V.
(86) International application number: PCT/EP2022/067597
(87) International publication number: WO 2023/274970

(56) References cited:
- EP-A1- 3 415 587
- EP-A1- 3 730 592
- US-A1- 2005 261 531

## Description

### Technical Field

The present disclosure relates to systems for vaporizing hydrocarbons and, more particularly, to systems for vaporizing hydrocarbon feed streams using electrically-powered heating.

### Background

Steam cracking of hydrocarbon feedstock in a gas-fired steam cracking furnace is a common method for producing numerous desired petroleum-derived products. In many steam cracking processes, prior to cracking the hydrocarbons in the cracking furnace to obtain the desired petroleum-derived products, a liquid hydrocarbon feed stream is often pre-heated to a temperature sufficient for partial evaporation of the hydrocarbons, while maintaining a sufficient portion of the hydrocarbon feed stream in liquid form to prevent undesirable fouling and to maintain sufficient heat transfer to the hydrocarbon feed stream. Thereafter, prior to entering a radiant portion of the cracking furnace where the hydrocarbons and steam are cracked, the partially evaporated hydrocarbon feed may be further heated to improve the cracking process once the hydrocarbon feed stream and steam enter the radiant portion of the cracking furnace.

In many gas-fired steam cracking furnaces, heat is generated by the combustion of fuel in the radiant section to provide heat for endothermic cracking reactions common in methods to produce petroleum-derived products. Flue gas resulting from the combustion of the fuel may be used to heat a convection section of the cracking furnace in which the liquid hydrocarbon feed stream is pre-heated and evaporated and steam is optionally pre-heated. Because the heat for the pre-heating section is provided indirectly by the flue gas, it may be difficult to control the heat in the convection section with a desired level of accuracy, and further, it may be difficult to tailor the heating conditions in the convection section for pre-heating different types of hydrocarbons feeds.

In addition, some hydrocarbon feeds may include heavy components, such as "heavy tail," which are difficult to evaporate in some convection sections, particularly in view of other operational considerations associated with its design, such as, for example, achieving balanced pressure drops, desired evaporation profiles, desired tube wall temperature profiles, as well as other considerations, such as steam dilution and throughput and/or capacity. Although attempts have been made to mitigate problems associated with hydrocarbon feeds including heavy components, Applicant has discovered that such attempts have been hindered in part as a result of the convection section relying on heat supplied by the flue gas from combustion in the radiant section, which may be constrained by the operational parameters of the radiant section.

In addition, heating the radiant section by combusting of fuel, such as natural gas and light gas, often results in formation and emission of carbon dioxide and other pollutants, such as NOₓ, etc. Such emissions may be undesirable in view of current environmental considerations. Petroleum-derived products are globally produced in very large quantities world. Thus, the production of such products using gas-fired steam cracking furnaces may result in an undesirably high emission of carbon dioxide.

An attempt to improve a method for steam cracking hydrocarbons is described in U.S. Patent Application Publication No. US 2016/0097002 A1 to Sundaram ("the '002 publication"). The '002 publication describes systems and processes for cracking hydrocarbon mixtures including compounds having a normal boiling temperature greater than 550 degrees Celsius (C), such as whole crudes. The '002 publication describes processing whole crudes and other hydrocarbon mixtures containing high boiling coke precursors that may increase coking and fouling during the cracking process. The process may include heating a hydrocarbon mixture to vaporize a portion of the hydrocarbons in the hydrocarbon mixture, and separating the first hydrocarbon mixture into a first vapor fraction and a first liquid fraction in a first separator and thereafter heating the first liquid fraction in a convection zone of a pyrolysis reactor to vaporize a portion of the hydrocarbons in the first liquid fraction and form a second heated hydrocarbon mixture. The second heated hydrocarbon mixture may thereafter be separated, in a second separator, into a second vapor fraction and a second liquid fraction. Steam may be mixed with the first vapor fraction, and the resulting mixture may be heated in the convection zone and fed to a first radiant coil in a radiant zone of the pyrolysis reactor for cracking of the hydrocarbons to produce olefins. The second vapor fraction may also be mixed with steam, superheated in the convection zone, and fed to a second radiant coil in a radiant zone of the pyrolysis reactor for production of additional olefins.

Applicant has recognized that the methods of '002 publication may still result in a need for systems and methods for producing petroleum-derived products from hydrocarbons that may be more accurately controlled or adjustable for different types of hydrocarbons, and that are more efficient and/or more environmentally friendly. For example, although the methods described in the '002 publication may provide gains in efficiency and an ability to crack whole crudes, they may still be less efficient than desired, and further, the methods described in the '002 publication may result in an undesirably high emission of carbon dioxide. EP 3730592 relates to an olefin synthesis plant for the production of light olefins, the olefin synthesis plant comprising a feed pretreatment section, a pyrolysis section to crack hydrocarbons in the feed stream in the presence of a diluent to produce a cracked gas stream, a primary fractionation and compression section configured to provide heat recovery from and quenching of the cracked gas stream; remove fuel oil, hydrogen sulfide, carbon dioxide, water, pyrolysis gasoline, or a combination thereof from the cracked gas stream; and compress the cracked gas stream, thus providing a compressed cracked gas stream; and/or a product separation section configured to separate a product olefin stream from the compressed cracked gas stream, wherein the olefin synthesis plant is configured such that, relative to a conventional olefin synthesis plant, more of the energy and/or the net energy required by the olefin synthesis plant, the feed pretreatment section, the pyrolysis section, the primary fractionation and compression section, the product separation section, or a combination thereof, is provided by a non-carbon based energy source, preferably comprising electricity, a renewable energy source and/or electricity.

Accordingly, Applicant has recognized a need for systems and methods for producing petroleum-derived products from hydrocarbons that are more accurately controllable, more tailorable to different types of hydrocarbon feed, and/or that are more efficient and/or more environmentally friendly. The present disclosure may address one or more of the above-referenced drawbacks, as well as other possible drawbacks.

### Summary

The present disclosure is generally directed to systems for vaporizing hydrocarbons and, more particularly, to systems for vaporizing hydrocarbon feed streams using electrically-powered heating. For example, in some embodiments, a system and method for vaporizing hydrocarbon feed streams may include an electrically-powered heater to at least partially vaporize the hydrocarbon feed stream. This may result in reducing or eliminating reliance on flue gas from radiant section firing for heat to pre-heat the hydrocarbon feed stream. For example, the hydrocarbon feed stream, in some embodiments, may be pre-heated using heat provided by one or more electrically-powered heaters and, in some embodiments, supplemented by other heat sources, to achieve a desired level of vaporization and/or a desired temperature prior to being supplied to the cracking furnace for cracking. In some embodiments, the systems for vaporizing the hydrocarbon feed may be capable of separating heavy components from the hydrocarbon feed and mitigating or eliminating problems that may often be associated with pre-heating hydrocarbon feed streams including heavy components. Thus, at least some embodiments of the systems disclosed herein may result in production of petroleum-derived products from hydrocarbons that are more accurately controllable, more tailorable to different types of hydrocarbon feed, and/or that are more efficient and/or environmentally friendly.

According some embodiments, a hydrocarbon cracking system may include a feed conduit positioned to supply a feed stream including one of a liquid hydrocarbon feed stream. The liquid hydrocarbon feed stream may include hydrocarbons having carbon numbers ranging from C2 to C15. The hydrocarbon cracking system also may include a pre-heating assembly in flow communication with the feed conduit and configured to heat the liquid hydrocarbon feed stream to provide a pre-heated feed stream including one or more of a vaporized portion of the pre-heated feed stream or a pre-heated liquid hydrocarbon feed stream and a remaining liquid portion of the feed stream. The pre-heating assembly may include an electrically-powered heater, an electrically-powered heater and a steam heater, or an electrically-powered heater and heat transfer fluid positioned to heat the feed stream. The pre-heating assembly also may include a flash device positioned to receive the pre-heated feed stream and separate one or more of a vaporized portion of the pre-heated feed stream or the pre-heated liquid hydrocarbon feed stream from the remaining liquid portion of the feed stream to supply a flash device outlet stream. The system further may include a steam cracking furnace positioned to receive the flash device outlet stream and heat the flash device outlet stream to provide a product stream including cracked hydrocarbons.

According to some embodiments, a vaporizer assembly to vaporize a naphtha feed stream may include a vapor-liquid separator positioned to receive the naphtha feed stream, vaporize a portion of the naphtha feed stream to provide a vaporized portion, and separate the vaporized portion from a liquid portion of the naphtha feed stream. The vaporizer assembly also may include a liquid heater in flow communication with the vapor-liquid separator and positioned to heat a heat transfer fluid via the heat transfer fluid directly contacting naphtha of the naphtha feed to heat the naphtha. The liquid heater may be electrically powered, and the heat transfer fluid may have a working range ranging between about 20 degrees C and about 550 degrees C. The vaporizer assembly further may include a circulation conduit providing flow communication between the liquid heater and the vapor-liquid separator to circulate the heat transfer fluid between the liquid heater and the vapor-liquid separator.

According to some embodiments, a vaporizer assembly to enhance vaporization of a naphtha feed stream may include a vapor-liquid separator positioned to vaporize at least a portion of the feed stream and separate a vapor portion of the feed stream from a liquid portion of the feed stream. The vapor-liquid separator may include a shell at least partially defining a vaporizing chamber positioned to receive the feed stream, and a feed stream input port in flow communication with the shell to supply the feed stream into the vaporizing chamber. The vaporizer assembly also may include a heating element positioned in an interior of the vaporizing chamber to be at least partially submerged in naphtha, and a vapor stream output port in flow communication with the vaporizer chamber and positioned to receive the vapor portion. The heating elements may include electrically-insulated heating coils, and the electrically-insulated heating coils may be positioned in the shell, such that naphtha submerges the electrically-insulated heating coils during heating of the naphtha in the vaporizing chamber. The vaporizer assembly further may include a liquid stream output port in flow communication with the vaporizer chamber and positioned to receive the liquid portion, and a vapor conduit in flow communication with the vapor stream output port. The vaporizer assembly still further may include a liquid conduit in flow communication with the liquid stream output port and a liquid stream valve in flow communication with the liquid conduit. The liquid stream valve may have an open position allowing the liquid portion to flow from the liquid stream output port and through the liquid conduit, and a closed position preventing the liquid portion from flowing through the liquid conduit.

According to some embodiments, a vaporizer assembly to enhance vaporization of a hydrocarbon feed stream, including liquid hydrocarbons having carbon numbers ranging from C2 to C15, may include a shell at least partially defining a vaporizer chamber and positioned to receive the hydrocarbon feed stream. The vaporizer assembly also may include a plurality of heating tubes positioned in the vaporizer chamber, such that the shell and the heating tubes at least partially define therebetween one or more outer fluid passages to receive a heat transfer fluid. Each of the plurality of heating tubes may include a tubular wall having an outer surface positioned for contact with the heat transfer fluid and an inner surface positioned for contact with a portion of the hydrocarbon feed stream. The vaporizer assembly further may include a plurality of heating elements positioned to heat the hydrocarbon feed stream. One or more of the plurality of heating elements may be electrically-powered and positioned in one or more of the plurality of heating tubes and at least partially defining, with an interior surface of the one or more of the plurality of heating tubes, feed passages positioned to receive a portion of the hydrocarbon feed stream therethrough and heat the portion of the hydrocarbon feed stream. The hydrocarbon feed stream may be heated by the heat transfer fluid through the tubular walls of the heating tubes and the heating elements while flowing through the feed passages.

According to some embodiments, a vaporizer assembly to enhance vaporization of a hydrocarbon feed stream including liquid hydrocarbons may include a shell at least partially defining a heat transfer chamber, and a plurality of heat transfer tubes positioned in the shell. The shell or the plurality of heat transfer tubes may be positioned to receive the hydrocarbon feed stream and the other of the shell or the plurality of heat transfer tubes may be positioned to receive a heat transfer medium, such that the heat transfer medium heats the hydrocarbon feed stream to provide partially vaporized hydrocarbons and liquid hydrocarbons. The heat transfer medium may be devoid of flue gas from a convection section of a steam cracker and may include steam, quench oil from a quench tower, and/or heat medium oil. The vaporizer assembly also may include a heating device positioned to receive the partially vaporized hydrocarbons and liquid hydrocarbons. The heating device may be an electrically-powered heater configured to heat the partially vaporized hydrocarbons and liquid hydrocarbons to a cracking furnace inlet temperature.

According to some embodiments, a vaporizer assembly to enhance vaporization of a hydrocarbon feed stream including liquid hydrocarbons may include one or more heat transfer tubes positioned to receive the hydrocarbon feed stream. The vaporizer assembly also may include one or more heating elements associated with the one or more heat transfer tubes and positioned to cause the one or more heat transfer tubes to heat the hydrocarbon feed stream as the hydrocarbon feed stream passes through the one or more heat transfer tubes to provide partially vaporized hydrocarbons and liquid hydrocarbons. The one or more heating elements may be electrically-powered, and heating of the one or more heat transfer tubes may be independent from flue gas from a convection section of a steam cracker.

Still other aspects and advantages of these exemplary embodiments and other embodiments, are discussed in detail herein. Moreover, it is to be understood that both the foregoing information and the following detailed description provide merely illustrative examples of various aspects and embodiments, and are intended to provide an overview or framework for understanding the nature and character of the claimed aspects and embodiments. Accordingly, these and other objects, along with advantages and features of the present invention herein disclosed, will become apparent through reference to the following description and the accompanying drawings. Furthermore, it is to be understood that the features of the various embodiments described herein are not mutually exclusive and may exist in various combinations and permutations.

### Brief Description of the Drawings

The accompanying drawings, which are included to provide a further understanding of the embodiments of the present disclosure, are incorporated in and constitute a part of this specification, illustrate embodiments of the present disclosure, and together with the detailed description, serve to explain principles of the embodiments discussed herein. No attempt is made to show structural details of this disclosure in more detail than can be necessary for a fundamental understanding of the embodiments discussed herein and the various ways in which they can be practiced. According to common practice, the various features of the drawings discussed below are not necessarily drawn to scale. Dimensions of various features and elements in the drawings can be expanded or reduced to more clearly illustrate embodiments of the disclosure.
FIG. 1 schematically illustrates an example hydrocarbon cracking system according to embodiments of the disclosure.
FIG. 2A schematically illustrates an example vaporizer assembly according to embodiments of the disclosure.
FIG. 2B schematically illustrates another example vaporizer assembly according to embodiments of the disclosure.
FIG. 2C schematically illustrates a further example vaporizer assembly according to embodiments of the disclosure.
FIG. 2D schematically illustrates still another example vaporizer assembly according to embodiments of the disclosure.
FIG. 2E schematically illustrates yet another example vaporizer assembly according to embodiments of the disclosure.
FIG. 2F schematically illustrates still another example vaporizer assembly according to embodiments of the disclosure.
FIG. 3 schematically illustrates another example vaporizer assembly including a vapor-liquid separator according to embodiments of the disclosure.
FIG. 4 schematically illustrates another example vaporizer assembly including two heating modes according to according to embodiments of the disclosure.
FIG. 5 is a partial top section view of the vaporizer assembly shown in FIG. 4 viewed along line 5-5 according to embodiments of the disclosure.
FIG. 6 schematically illustrates another example vaporizer assembly including two heating modes according to according to embodiments of the disclosure.
FIG. 7A is a partial side section view of a portion of the example vaporizer assembly shown in FIGS. 4 and 5 according to embodiments of the disclosure.
FIG. 7B is a partial side section view of a portion of the example vaporizer assembly shown in FIG. 6 according to embodiments of the disclosure.
FIG. 8A schematically illustrates a further example vaporizer assembly according to embodiments of the disclosure.
FIG. 8B schematically illustrates still a further example vaporizer assembly according to embodiments of the disclosure.
FIG. 8C schematically illustrates yet another example vaporizer assembly according to embodiments of the disclosure.
FIG. 9A schematically illustrates yet a further example vaporizer assembly according to embodiments of the disclosure.
FIG. 9B schematically illustrates still a further example vaporizer assembly according to embodiments of the disclosure.
FIG. 9C schematically illustrates yet another example vaporizer assembly according to embodiments of the disclosure.

### Detailed Description

The drawings may use like numerals to indicate like parts throughout the several views, the following description is provided as an enabling teaching of exemplary embodiments, and those skilled in the relevant art will recognize that many changes may be made to the embodiments described. It also will be apparent that some of the desired benefits of the embodiments described can be obtained by selecting some of the features of the embodiments without utilizing other features. Accordingly, those skilled in the art will recognize that many modifications and adaptations to the embodiments described are possible and may even be desirable in certain circumstances. Thus, the following description is provided as illustrative of the principles of the embodiments and not in limitation thereof.

The phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to," unless otherwise stated. Thus, the use of such terms is meant to encompass the items listed thereafter, and equivalents thereof, as well as additional items. The transitional phrases "consisting of" and "consisting essentially of," are closed or semi-closed transitional phrases, respectively, with respect to any claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish claim elements.

In conventional naphtha cracking, naphtha is vaporized and preheated in a convection section of a cracking furnace in a very specific way. First, the naphtha is mostly vaporized (typically, 85% or more of the naphtha is vaporized) in a bank of convection section tubes. Second, the mostly vaporized naphtha is mixed with superheated dilution steam, outside the convection section, to finish the vaporization. Then, the fully vaporized naphtha/steam mixture is further heated in another bank of convection section tubes before going into the cracking furnace radiant section.

Vaporization in the first bank of convection section tubes occurs in a plug-flow manner. As the naphtha travels down the tube, a larger and larger fraction is vaporized. Avoidance of crossing from a two-phase mixture to a fully vaporized mixture (or having a "dry point") in the convection section tubes is preferred because small amounts of heavies can be deposited on the hot tube surface and over time can lead to significant fouling. That is why the final vaporization is done outside the convection section and by mixing.

Low carbon emitting processes are ones where carbon dioxide emissions to the atmosphere are minimized or eliminated. If we consider a low carbon emitting steam cracker that uses an electrically powered furnace, there will be no flue gas, hence no convection section, and, a new way to vaporize naphtha is required.

Electric process heaters operating on resistive heating technology are known to the chemical industry in varied applications. Most commonly, electric heaters are employed on machinery lube oil heating or dryer regeneration gas heating. Even boiling applications, such as pure component vaporizers for liquids such as ammonia and propane have been designed. Using electric heaters to boil mixtures is a natural extension of electric heating technology application. However, in addition to the process design challenges in electrified steam cracker process design, it is necessary to overcome and address the technical challenges of using them for naphtha and other multicomponent and wide boiling mixtures in steam cracking applications. The steam cracking feed needs to transform from a fully liquid to a fully vapor feed.

Electrically heated vaporizers are not conventional for multicomponent feeds. Electric heaters behave differently than conventional steam or flue gas fired heaters. They operate with constant heat flux across the heat generating element. Therefore, with two phases present, such as gas and liquid, where there are differences in thermal diffusivity among the phases (e.g., gas thermal diffusivity is less than liquid thermal diffusivity), inhomogeneous heat fluxes can lead to localized higher than desired heating element temperature and thus heating element burnout. Furthermore, and more specifically to steam cracking, having solid phase heavies deposits in equipment near where full vaporization occurs is even more critically damaging to electric heaters because the resulting deposits will locally increase the thermal resistance, leading to higher heating element temperatures generated on the resistive wire and element burnout. Commercial scale heating duty requirements for naphtha vaporization service are greater than currently available electric heating technology in a single unit, so number of heaters, placement, and controls also must be taken into account.

Another constraint in using electric resistive heaters compared to a conventional feed heater in a furnace convection section is fluids in electric heaters are always on the shell side of the exchanger because the electric heating elements are in the tube. The conventional geometry cannot be directly applied in using electric resistive heaters on liquids steam cracking feed preheat.

Designs to address the technical challenges are described herein. In doing so, it may be necessary to manage the fluid (vapor/liquid) phases contacting the electric heating elements at all points in the design while maintaining the process demands and requirements already inherent in steam cracking of liquid feedstocks.

The general concept is that naphtha may be vaporized by steam or by electric heating in a conventional "reboiler" style vaporizer. In these schemes, the tube bundle may be submerged in liquid and the vaporization may be a CSTR (continuously stirred tank reactor) configuration. In electric heating, it may be critical to keep the tubes submerged because any tubes that become dry may overheat and may very likely burnout causing a shutdown.

When vaporization is done in a CSTR style reboiler, any heavies in the liquid may accumulate and build up in the pool of boiling liquid. To deal with this problem, certain embodiments of the present invention a draw materialfrom the pool of liquid and that draw may be mixed with superheated dilution steam where the heavies are vaporized. The mixture of dilution steam, vaporized naphtha, and vaporized heavies, may then be mixed with the vapor from the reboiler in a way that may avoid any condensation. That mixture may then be further heated and sent to the electric cracking furnace.

There are a variety of specific flow schemes and options consistent with this broader concept and they are described in the figures and in the claims.

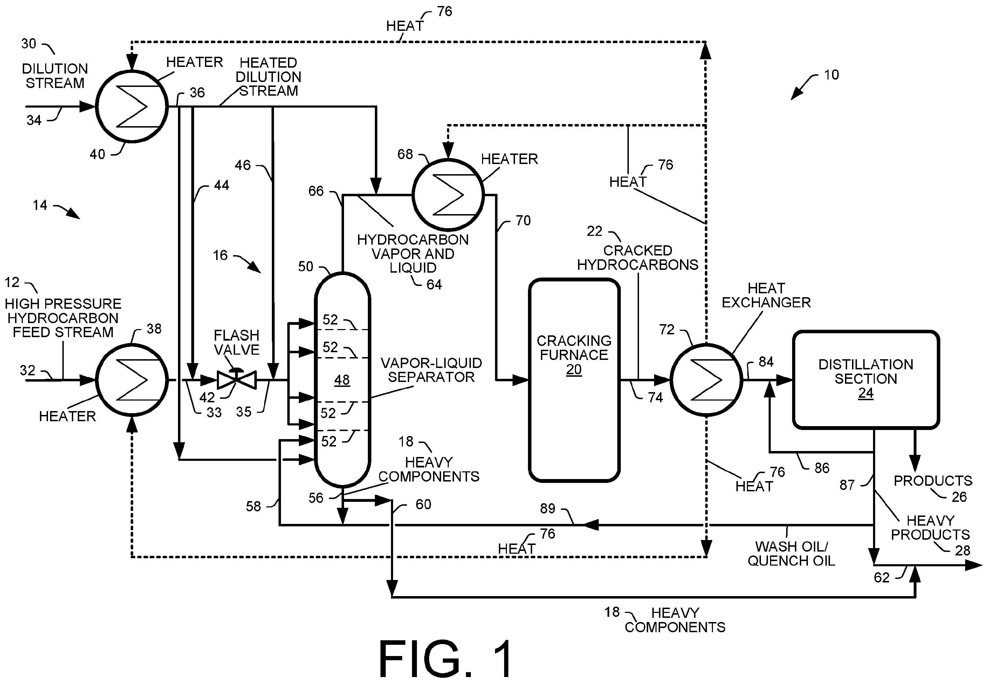

FIG. 1 schematically illustrates an example hydrocarbon cracking system 10 according to embodiments of the disclosure. As shown in FIG. 1, in some embodiments, the system 10 may be configured receive a hydrocarbon feed stream 12, pre-heat the hydrocarbon feed stream 12 via a pre-heating assembly 14, at least substantially vaporize hydrocarbons in the hydrocarbon feed stream 12 via a vaporizer assembly 16, separate, in some embodiments, heavy components 18 and/or liquid from the hydrocarbon feed stream 12, and supply the substantially vaporized hydrocarbons to a cracking furnace 20 for cracking. Following cracking in the cracking furnace 20, the cracked hydrocarbons 22 may be supplied to a distillation section 24 for at least partially separating the cracked hydrocarbons 22 into products 26, which may include desired intermediate or final product and heavy products 28, which may include, for example, heavy fractions, such as wash oil or quench oil.

As shown in FIG. 1, in some embodiments, the pre-heating assembly 14 may be positioned and configured to heat one or more hydrocarbon feed streams 12 and/or a dilution stream 30. In some embodiments, the dilution stream 30 may include, for example, steam including hydrogen and oxygen, water, pure hydrogen (e.g., without steam), and/or pure methane (e.g., without steam). The system 10 may include a feed line 32 (e.g., a conduit) configured to supply the hydrocarbon feed stream 12 to the pre-heating assembly 14 and a dilution stream line 34 (e.g., a conduit) configured to supply the dilution stream 30 to the pre-heating assembly 14. The pre-heating assembly 14 may be configured to receive the hydrocarbon feed stream 12 via the feed line 32 and to heat the hydrocarbon feed stream 12 to provide a pre-heated feed stream at 33 including a vaporized portion and/or a pre-heated liquid hydrocarbon feed stream, and, in some embodiments, a remaining liquid portion of the hydrocarbon feed stream 12. In some embodiments, the hydrocarbon feed stream 12 may include naphtha, ethane, and/or other hydrocarbons (e.g., gas condensate and/or hydrocarbons having carbon numbers ranging from C2 to C15), as will be understood by those skilled in the art. In some embodiments, the hydrocarbon feed stream 12 and the dilution stream 30 may be joined and/or mixed, for example, prior to entry into the pre-heating assembly 14 and/or after entering the pre-heating assembly 14, as will be understood by those skilled in the art.

Some embodiments of the pre-heating assembly 12 may include one or more heaters configured to heat the hydrocarbon feed stream 12 and/or the dilution stream 30, such as a feed line heater 38 positioned in the feed line 32 and a steam line heater 40 positioned in the dilution stream line 34, for example, as shown in FIG. 1. The feed line heater 38 and/or the steam line heater 40 may include an electrically-powered heater, a combination of an electrically-powered heater and a steam heater, and/or an electrically-powered heater and a heat transfer fluid positioned and configured to heat the hydrocarbon feed stream 12 and/or the dilution stream 30, for example, as explained herein. In some embodiments, electrically-powered heaters may be configured to use a hot oil system and exchange heat with the hydrocarbon feed stream 12 and/or the dilution stream 30. In some embodiments, heat is supplied to the system 10 independently from flue gas from the cracking furnace 20, which may not be heated by combustion of fuel.

As shown in FIG. 1, some embodiments of the system 10 may include a flash valve 42 positioned downstream of the feed line heater 38 and configured to quickly partially vaporize hydrocarbons in the hydrocarbon feed stream 12, for example, substantially without adding heat to the hydrocarbon feed stream 12. For example, the hydrocarbon feed stream 12, prior to being supplied to the flash valve 42, may be pressurized, for example, to a pressure ranging from about 10 bar to about 50 bar (e.g., from about 10 bar to about 30 bar, or above about 20 bar). Upon supply to the flash valve 42, which may be a pressure-relief valve, a portion of the hydrocarbons in the pressurized hydrocarbon feed stream 12 may quickly vaporize as the pressure drops, resulting in a vaporized portion and a liquid portion. In some embodiments, vaporizing a portion of the hydrocarbon feed stream 12 in this example manner may result in reducing the likelihood or substantially preventing fouling of a feed line 35, for example, due to deposit of particulates in the hydrocarbon feed stream 12 by preventing excessive evaporation due to high heating to achieve evaporation and/or high heater temperatures required to achieve the desired degree of vaporization.

As shown in FIG. 1, in some embodiments, the dilution stream 30 may be merged with the hydrocarbon feed stream 12 upstream and/or downstream of the flash valve 42. For example, as shown, downstream of the steam line heater 40, a pre-flash line 44 may provide flow communication between the dilution stream line 34 and the feed line 33 downstream relative to the feed line heater 38 and upstream relative to the flash valve 42. A post-flash line 46 may provide flow communication between the dilution stream line 34 and the feed line 35 downstream relative to the flash valve 42.

As shown in FIG. 1, some embodiments of the system 10 may include a vapor-liquid separator 48 positioned to receive the hydrocarbon feed stream 12 following partial vaporization and/or the addition of dilution steam (e.g., downstream relative to the flash valve 42). In some embodiments, the vapor-liquid separator 48 may include an electrically-powered heater, and the vapor-liquid separator 48 may be configured to vaporize a portion of the combined (e.g., mixed) hydrocarbon feed stream 12 and dilution stream 30 to provide an at least partially vaporized portion, and separate the at least partially vaporized portion from a liquid portion of the combined hydrocarbon feed stream 12 and dilution stream 30. In some embodiments, the vapor-liquid separator 48 may include or be a flash device, such as a modified version of a device sometimes referred to as a "heavy oil processing scheme" device (HOPS device), and the flash device may be positioned and configured to provide a flash device output stream including an at least partially vaporized portion including hydrocarbon vapor and heated hydrocarbon liquid.

For example, the vapor-liquid separator 48 may include a column-like shell 50 and one or more separation trays 52, and/or structured or unstructured packing, etc., positioned at one or more vertical levels to receive at least a portion of the hydrocarbon feed stream 12 and dilution stream 30 and separate the vaporized portion from the liquid portion of the hydrocarbon feed stream 12 and dilution stream 30. In some embodiments, the at least a portion of the hydrocarbon feed stream 12 and dilution stream 30 may be supplied to the vapor-liquid separator 48 via one or more inlet ports in the shell 50 located at different vertical levels of the vapor-liquid separator 48, for example, corresponding to the levels of the one or more trays 52. In some examples, a heat transfer fluid may also be supplied to the vapor-liquid separator 48, and in the heat transfer fluid may be supplied to the vapor-liquid separator 48 via one or more of the inlet ports.

In some embodiments, the vapor-liquid separator 48 may be configured to separate the heavy components 18 from the hydrocarbon feed stream 12. The heavy components 18 may include "heavy tail" and/or heavy fraction liquids, as will be understood by those skilled in the art. For example, as shown in FIG. 1, a lower end of the shell 50 may include a lower outlet through which the heavy components 18 may be drawn into a heavy component line 56. Some embodiments may include a return line 58 providing flow communication between the heavy component line 56 and one or more inlets in the shell 50 of the vapor-liquid separator 48, for example, to prevent the lower portion of the interior of the shell 50 from drying out, which may lead to an undesirable condition. As shown in FIG. 1, some embodiments may include a heavy product line 60 in flow communication with the heavy component line 56 and, in some embodiments, a heavy product collection line 62 configured to receive heavy products 28 from the hydrocarbon cracking process.

As shown in FIG. 1, in some embodiments of the vapor-liquid separator 48, the shell 50 may include a vapor and liquid outlet (e.g., in an upper portion of the shell 50) through which the hydrocarbon vapor and liquid 64 may flow to a vapor and liquid line 66. In some embodiments, the vapor and liquid line 66 may provide flow communication with a vapor and liquid heater 68 configured to substantially complete vaporization of the hydrocarbon feed stream 12 and dilution steam, and/or to heat the hydrocarbon feed stream 12 and dilution steam to an inlet temperature desired for being supplied to the cracking furnace 20. In some embodiments, the inlet temperature may range from about 400 degrees C to about 850 degrees C (e.g., from about 500 degrees C to about 750 degrees C). In some embodiments, the vapor and liquid heater 68 may include an electrically-powered heater, a combination of an electrically-powered heater and a steam heater, and/or an electrically-powered heater and a heat transfer fluid positioned and configured to heat the hydrocarbon vapor and liquid 64, for example, as explained herein. In some embodiments, the vapor and liquid heater 68 may be an electrically-powered heater, which may be configured to use a hot oil system and exchange heat with the hydrocarbon vapor and liquid 64.

The substantially completely vaporized hydrocarbon feed stream 12 and dilution steam may be supplied via a furnace line 70 to the cracking furnace 20. In some embodiments, the cracking furnace 20 may be electrically-powered, for example, heated by electrical heaters supplied with electrical power to generate heat. For example, the cracking furnace 20 may include a cracking heating chamber containing cracking coils, and electrical heaters in the cracking heating chamber may be supplied with electrical power to heat the cracking coils. The hydrocarbon feed stream 12 and dilution steam may pass through the cracking coils in the cracking heating chamber for being heated and cracked in one or more endothermic reactions to provide the cracked hydrocarbons 22 and by-products, for example, as will be understood by those skilled in the art.

As shown in FIG. 1, in some embodiments of the system 10, the cracked hydrocarbons 22 and by-products may be supplied to a heat exchanger 72 via an exchanger line 74. The heat exchanger 72 may be positioned and configured to transfer heat from the cracked hydrocarbons 22 and by-products, for example, to generate steam from liquid water. In some embodiments, the heat exchanger 72 may be a transfer line exchanger (TLE) configured to quench the cracked hydrocarbons 22 and by-products received from the cracking furnace 22.

As shown in FIG. 1, in some embodiments, a portion of the heat 76 from the heat exchanger 72 may be supplied back to the dilution stream 30, for example, at the steam line heater 40 to add heat 76 to the dilution stream 30. In some embodiments, a portion of the heat 76 may be diverted to the vapor and liquid heater 68. In some embodiments, a portion of the heat76 from the heat exchanger 72 may be supplied back to the hydrocarbon feed stream 12, for example, at the feed line heater 38, to assist with heating the hydrocarbon feed stream 12. In some embodiments, the heat 76 may be transferred in the form of recovered energy from the heat exchanger 72, for example, via direct integration of the heat exchangers and/or by using very high pressure (VHP) steam generated in the heat exchanger 72 as a heat transfer medium. In some embodiments, this may supplement and/or replace heat provided by one or more of the heaters 38, 40, or 68. One or more of the heaters 38, 40, 68, or 72 may include multiple heat exchangers, for example, arranged in series and/or in parallel.

As shown in in FIG. 1, after passing through the heat exchanger 72, the cracked hydrocarbons 22 may be supplied to the distillation section 24 via a distillation line 84. The distillation section 24 may be positioned and configured to separate the cracked hydrocarbons 22 into the products 26 and the heavy products 28. In some embodiments, the products 26 may include, for example, olefins, such as ethylene, propylene, butadiene, BTX, and gasoline and/or heavy oil. Other products are contemplated as will be understood by those skilled in the art. In some embodiments, the remainder of the products 26 acquired from the cracked hydrocarbons 22 may include by-products, such as, for example, methane, hydrogen, and/or condensed water. Other by-products are contemplated as will be understood by those skilled in the art. In some embodiments, the products 26 may be supplied downstream for collection and/or further processing, as will be understood by those skilled in the art.

As shown in FIG. 1, in some embodiments, the system 10 may include a recycle line 86 extending between a heavy product line 87 and the distillation line 84 to return a portion of the heavy products 28 to the distillation section 24 after being combined with the cracked hydrocarbons 22 upstream of the distillation section 24 before entering the distillation section 24. In some embodiments, at least a portion of this example arrangement may be incorporated into the distillation section 24, which may include one or more internal recycles, and one or more of the internal recycles may be mixed into the primary fractionator, for example, instead of the feed to the fractionator. As shown in FIG. 1, in some embodiments, the heavy product line 87 may also be connected to the heavy product collection line 62. In some embodiments, a heavy product return line 89 may be provided between the heavy product line 87 and the return line 58 and/or one or more inlets of the lower portion of the shell 50 of the vapor-liquid separator 48 to supply a portion of the heavy products 28 (e.g., wash oil/quench oil) to the vapor-liquid separator 48, for example, to prevent the lower portion of the interior of the shell 50 from drying out.

In some embodiments consistent with the system shown in FIG. 1, it may not be critical to vaporize the hydrocarbon feed stream 12 to a predetermined extent or specification. For example, the hydrocarbon feed stream 12 may be heated while under a high pressure, for example, as explained above, which may result in the hydrocarbon feed stream substantially remaining in the liquid phase. This may reduce fouling resulting from deposition of solids in the hydrocarbon feed stream 12. In some embodiments, thermal coking may be controlled, for example, by controlling an independently-operated and/or -controlled heater, which may include an electrically-powered heater and/or a heat medium system including, for example, a heat transfer medium and/or liquid. As explained above, the hydrocarbon feed stream 12 may thereafter be flashed, for example, in the vapor-liquid separator 48 (e.g., a modified flash drum or a modified HOPS-like device), where some remaining liquid may be separated.

In some embodiments consistent with the system 10 shown in FIG. 1, the dilution stream 30 temperature supplied to the vapor-liquid separator 48 may be adjusted substantially or completely independently, and in some embodiments, some of the remaining liquid feed may be partially visbroken, cracked, stripped, etc. The heat exchanger 72 may be or include a TLE, which may be used to quench the cracked hydrocarbons and by-products, which may generate very high pressure (VHP) steam. In some embodiments, the VHP steam, which may be saturated, may be used for heat integration in the TLE. For example, the VHP steam may be used as a heating medium for the heaters 38, 40, and/or 68. In some embodiments, this may include using at least a portion of the VHP steam to drive one or more turbines for generating work for use for heating purposes.

As mentioned above, in some embodiments consistent with the system 10 shown in FIG. 1, wash oil and/or quench oil may be provided by the cracking furnace 22, and may be used to keep the lower portion of the shell 50 of the vapor-liquid separator 48, which may include or be a modified HOPS-like device, wetted and reduce or prevent fouling. In some embodiments, little or no condensing and/or rectification may be needed in the upper portion of the shell 50 of the vapor-liquid separator 48.

In some embodiments consistent with the system 10 shown in FIG. 1, one or more of the heaters may be operated and controlled independently of one another, which may allow improved operational control of the different processes occurring within the system 10. In some embodiments, the ability to operate and control the heaters independently may also allow tailoring the operation of the system 10 for cracking different types of hydrocarbon feeds. In some embodiments, the degree of flash may be controlled by controlling different parameters, such as the pressure of the hydrocarbon feed stream 12, its temperature following the feed line heater 38, and/or the temperature of the dilution stream 30, which may be controlled independently from one another in some embodiments.

One or more of the heaters 38, 40, and/or 68, and/or the heat exchanger 72 may be, or include, all types of, and/or any number of, heaters and/or heat exchangers. In some embodiments, the heaters 38, 40, and/or 68, and/or the heat exchanger 72 may be arranged in series and/or in parallel. One or more of the heaters 38, 40, or 68 and/or the heat exchanger 72 may be, or include, one or more heat exchangers. In some embodiments, the heaters 38, 40, and/or 68 may be, or include, any type of electric heater, non-electric heater, may use thermos-siphons, submerged heater bundles, forced circulation, heat transfer fluids (e.g., via indirect heating), etc., and/or may be, or include, a shell-in-tube heater, a core-in-kettle heater, etc.

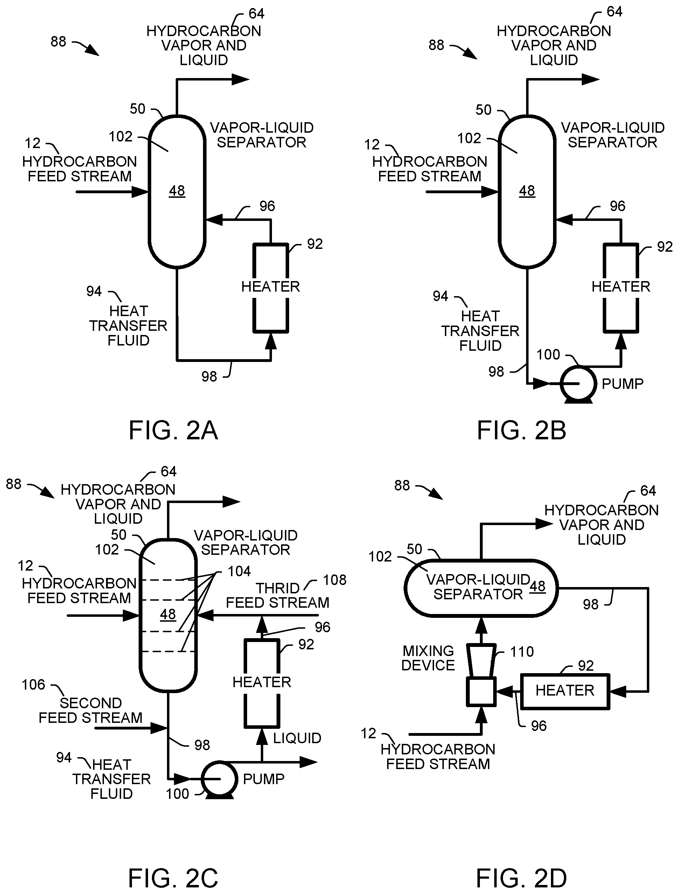

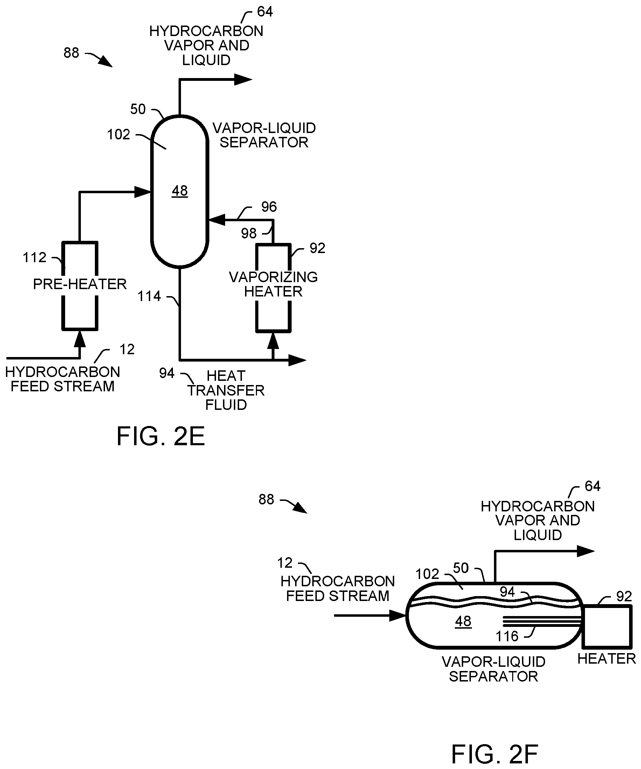

FIGS. 2A, 2B, 2C, 2D, 2E, and 2F schematically illustrate example vaporizer assemblies 88 according to embodiments of the disclosure. As shown in FIG. 2A, the vaporizer assembly 88 may be positioned and configured to at least partially vaporize a hydrocarbon feed stream 12, such as, for example, a naphtha feed stream. As shown in FIG. 2A, the vaporizer assembly 88 may include a vapor-liquid separator 48 positioned to receive the hydrocarbon feed stream 12, at least partially vaporize a portion of the hydrocarbon feed stream 12 to provide an at least partially vaporized portion including hydrocarbon vapor and liquid 64, and separate the at least partially vaporized portion from a liquid portion of the hydrocarbon feed stream 12.

As shown in FIG. 2A, some embodiments also may include a heater 92 (e.g., a liquid heater) in flow communication with the vapor-liquid separator 48 and positioned to heat a heat transfer fluid 94 to provide a heated heat transfer fluid 96. In some embodiments, the heater 92 may be electrically powered, and the heat transfer fluid 96 may have a working range ranging between about 20 degrees C and about 550 degrees C. In some embodiments, the heat transfer fluid 94 may include, for example, pyrolysis quench oil, pan oil, fuel oil product, kerosene, diesel, other gasoils, hydrotreated or hydrocracked gasoils, naphthalene, tar, coker oils, lube oils, residual un-vaporized components from the hydrocarbon feed stream, heat transfer fluids, silicone oils, ionic liquids, molten metals, flowable slurries, particulate mixtures, molten salts, commercially synthesized heat transfer fluids, and combinations thereof. The vaporizer assembly 88 further may include a circulation conduit 98 providing flow communication between the heater 92 and the vapor-liquid separator 48 to circulate the heat transfer fluid 94 between the heater 92 and the vapor-liquid separator 48.

FIG. 2B schematically illustrates another example vaporizer assembly 88 according to embodiments of the disclosure. The embodiment shown in FG. 2B is similar to the embodiment shown in FIG. 2B, except that it includes a pump 100 to circulate the heat transfer fluid 94 through the circulation conduit 98. Various suitable types of liquid pumps are contemplated as will be understood by those skilled in the art.

FIG. 2C schematically illustrates a further example vaporizer assembly 88 according to embodiments of the disclosure. As shown in FIG. 2C, some embodiments of the vaporizer assembly 88 may include vapor-liquid separator 48 including a shell 50 at least partially defining a vaporizing chamber 102 and one or more separation trays 104 positioned in the vaporizing chamber 102 to receive at least a portion of the hydrocarbon feed stream 12 and at least partially separate the vaporized portion from the liquid portion of the hydrocarbon feed stream 12. The portion of the hydrocarbon feed stream 12 and the heat transfer fluid 94 may be supplied to the vapor-liquid separator 48 at an inlet point above, below, or at the level of one of the separation trays 104. For example, as shown in FIG. 2C, a second feed stream 106 (e.g., a hydrocarbon feed stream) may supply a second feed to the circulation conduit 98 at a point below the vapor-liquid separator 48, and a third feed stream 108 (e.g., a hydrocarbon feed stream) may supply a third feed to the circulation conduit 98 at a point along the length (e.g., height) of the shell 50 of the vapor-liquid separator 48. In the example shown in FIG. 2C, the heated heat transfer fluid 96 is combined with the third feed stream 108 upstream (e.g., before) the combined third feed stream 108 and heated heat transfer fluid 96 enter the shell 50.

FIG. 2D schematically illustrates still another example vaporizer assembly 88 according to embodiments of the disclosure. In the embodiment shown in FIG. 2D, the hydrocarbon feed stream 12 is supplied to a mixing device 110 in flow communication with the circulation conduit 98. In some embodiments, the mixing device 110 may be positioned and configured to enhance contact between the hydrocarbon feed stream 12 and the heat transfer fluid 94, for example, upstream of the vapor-liquid separator 48. The heater 92 may be positioned and configured to heat the heat transfer fluid 94 prior to being mixed with the hydrocarbon feed stream 12, for example, as shown in FIG. 2D. The mixing device 110 may include a static mixer, an impeller, a distributor, a nozzle, an ejector, and/or a mixing pump.

FIG. 2E schematically illustrates yet another example vaporizer assembly 88 according to embodiments of the disclosure. In the embodiment shown in FIG. 2E, the vaporizer assembly 88 is similar to the vaporizer assembly 88 embodiment shown in FIG. 2A, except the embodiment shown in FIG. 2E includes a pre-heater 112 positioned and configured to heat the hydrocarbon feed stream 12 prior to (e.g., upstream from) the vapor-liquid separator 48. In addition, in some embodiments, a portion of the heat transfer fluid 94 may be removed from the vaporizer assembly 88 system, for example, via a drain conduit 114, as shown in FIG. 2E.

FIG. 2F schematically illustrates still another example vaporizer assembly 88 according to embodiments of the disclosure. In the embodiment shown in FIG. 2F, the vapor-liquid separator 48 includes a shell 50 at least partially defining a vaporizing chamber 102. Heating elements 116 are contained in a lower portion of the vaporizing chamber 102 and may be electrically-powered by the heater 92. The hydrocarbon feed stream 12 is supplied to the vaporizing chamber 102, and the level 118 of the heat transfer fluid 94 is maintained to at least partially (e.g., fully) cover the heating elements 116.

**In** some embodiments consistent with the vaporizer assemblies 88 shown in FIGS. 2A-2F, the vapor-liquid separator 48 may include internal structures, such as for example, mass transfer equipment (e.g., distillation trays and/or packings), liquid and/or mixed feed distributors, vapor/liquid separators (e.g., mesh pads, chevron vanes, cyclones, etc.), baffles, impingement plates, nozzles, impinging nozzles for feed-to-heat transfer fluid mixing, mixing blades, and/or mixing impellers. The shell 50 may have different orientations, different sizes, different shapes, different length-to-diameter/height/width ratios, and/or different cross-sectional shapes. For example, the shell 50 may be horizontally-oriented, vertically-oriented, may have a substantially round cross-sectional shape, or may have a substantially rectangular cross-sectional shape. In some embodiments, the hydrocarbon feed stream 12 may enter the shell 50 at different entry points, and a single hydrocarbon feed stream 12 or multiple hydrocarbon feed streams 12 may be supplied to the shell 50.

**In** some embodiments, steam may be supplied to (e.g., injected into) the shell 50 and/or downstream of the vapor-liquid separator 48. For example, downstream steam introduction of steam may be into the hydrocarbon vapor, liquid, or both. In some embodiments, re-mixing downstream may be performed, for example, in any sequence.

Some embodiments of the vaporizer assembly 88 may include one or more pumps, and the pumps may include pumps of the same type or different types. The pumps may include an eductor/ejector, for example, powered by the pressure of the hydrocarbon feed stream 12 and/or steam injection. In some embodiments, the one or more pumps may serve to combine and/or mix the hydrocarbon feed stream 12 with the heat transfer fluid 94. Additional mixing devices are contemplated. Some embodiments of the vaporizer assembly 88 may include an electric heater, which may act as a thermo-syphon reboiler connected to a pot/separator, which may add heat to the vaporizer assembly 88.

**In** some embodiments, the heat transfer fluid 94 may be or include a liquid salt or fluids with similar heat transfer properties to a liquid salt. In some such embodiments, the liquid salt may be circulated to one or more electrically-powered heaters. The liquid salt may be contacted with the hydrocarbon feed stream (e.g., a naphtha feed stream). In some embodiments, the liquid salt may settle to the lower portion (e.g., the bottom) of the shell 50 for recirculation, for example, as the hydrocarbon feed stream boils off.

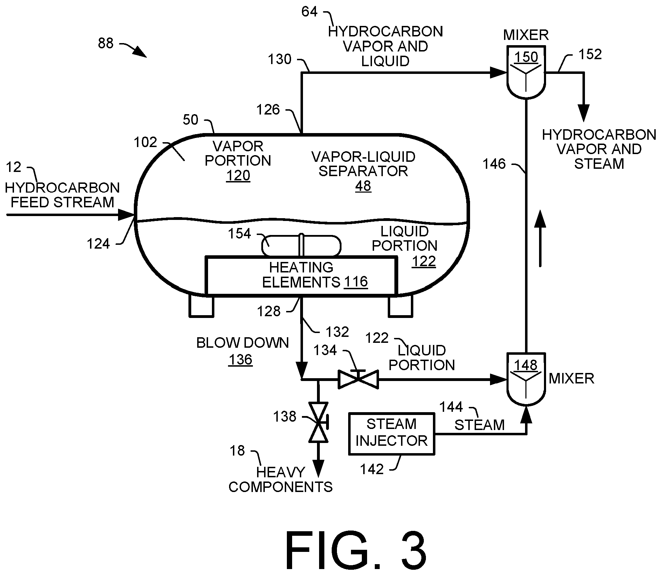

FIG. 3 schematically illustrates another example vaporizer assembly 88 including a vapor-liquid separator 48 to enhance vaporization of the hydrocarbon feed stream 12, which may be a naphtha feed stream, according to embodiments of the disclosure. As shown in FIG. 3, the vaporizer assembly 88 may include a vapor-liquid separator 48 positioned and configured to receive the hydrocarbon feed stream 12, and the vapor-liquid separator 48 may be positioned and configured to vaporize at least a portion of the hydrocarbon feed stream 12 and separate a vapor portion 120 (e.g., a vapor phase) of the hydrocarbon feed stream 12 from a liquid portion 122 (e.g., a liquid phase) of the hydrocarbon feed stream 12. As shown in FIG. 3, some embodiments of the vapor-liquid separator 48 may include a shell 50 at least partially defining a vaporizing chamber 102 positioned and configured to receive the hydrocarbon feed stream 12. The vapor-liquid separator 48 may also include a feed stream input port 124 in flow communication with the shell 50 to supply the hydrocarbon feed stream 12 into the vaporizing chamber 102. The vapor-liquid separator 48 also may include one or more heating elements 116 positioned in an interior of the vaporizing chamber 102 and configured to be at least partially submerged in hydrocarbon feed stream 12 (e.g., in the liquid portion 122). The shell 50 also may include a vapor stream output port 126 in flow communication with the vaporizer chamber 102 and positioned to receive the vapor portion 120. As shown, in some embodiments, the vapor stream output port 126 may be in an upper portion of the shell 50. The shell 50 further may include a liquid stream output port 128 in flow communication with the vaporizer chamber 102 and positioned to receive the liquid portion 122. As shown, in some embodiments, the liquid stream output port 128 may be in a lower portion of the shell 50.

As shown in FIG. 3, some embodiments of the vaporizer assembly 88 also may include a vapor conduit 130 in flow communication with the vapor stream output port 126 and a liquid conduit 132 in flow communication with the liquid stream output port 128. A liquid stream valve 134 may be positioned in flow communication with the liquid conduit 132, the liquid stream valve 134 having an open position allowing the liquid portion 122 to flow from the liquid stream output port 128 and through the liquid conduit 132 and a closed position preventing the liquid portion 122 from flowing through the liquid conduit 132. In some embodiments, the vaporizer assembly 88 may include a blow down 136 positioned in flow communication with the liquid conduit 132, for example, to facilitate removal of heavy components 18 of the liquid portion 122 from the vapor-liquid separator 48. In some embodiments, the liquid conduit 132 may act as the blow down 136. As shown in FIG. 3, a drain valve 138 may be provided in flow communication with the liquid conduit 132 to facilitate selective draining of at least a portion of the heavy components 18, for example, for use as explained herein. In some embodiments, the liquid stream valve 134 may be configured to selectively provide flow communication between the liquid conduit 132 and other portions of the vaporizer assembly 88, for example, as explained below.

As shown in FIG. 3, some embodiments of the vaporizer assembly 88 further may include a steam injector 142 in flow communication with the liquid conduit 132 and positioned to inject steam 144 into the liquid conduit 132 to vaporize at least a portion of the liquid portion 122 in the liquid conduit 132 to provide steam and vaporized liquid. As shown in FIG. 3, in some embodiments, the vaporizer assembly 88 may include a steam conduit 146 positioned in flow communication with the steam injector 142 and the vapor conduit 130 to supply the steam 144 and vaporized liquid to the vapor conduit 130. In some embodiments, a mixer 148 may be provided in flow communication with the liquid conduit 132 and the steam conduit 146 to mix the steam 144 and liquid portion 122, and/or a mixer 150 may be provided in flow communication with the vapor conduit 130 and the steam conduit 146 to mix the vapor portion 120 with the mixed steam 144 and the liquid portion 122. The vaporizer assembly 88 may also include a vapor and steam conduit 152 positioned and configured to receive the vapor and steam mixture from the steam conduit 146 for supplying to the mixture downstream to, for example, the cracking furnace 20 for cracking.

In some embodiments, the one or more heating elements 116 positioned in the interior of the vaporizing chamber 102 may include electrically-insulated heating coils, and the electrically-insulated heating coils may be positioned in the shell 50, such that liquid portion 122 submerges the electrically-insulated heating coils during heating of the liquid portion 122 in the vaporizing chamber 102. In some embodiments, the heating elements 116 may be tubes, and the heating elements 116 may be arranged in the vaporizing chamber 102 in different designs based at least in part on, for example, preferred heat transfer strategies. In some embodiments, the vapor-liquid separator 48 may include a stirring device 154 positioned inside the shell 50 to stir the liquid portion 122 during heating, for example, to promote heat transfer between the heating elements 116 and the liquid portion 122.

In some embodiments consistent with the vaporizer assembly 88 shown in FIG. 3, a substantially constant flow of the hydrocarbon feed stream 12 may be supplied to the vaporizing chamber 102, and the hydrocarbon feed stream 12 may directly contact the electrically-insulated heating coils. In some embodiments, all the heating coils may be completely submerged in the liquid portion 122 during the heating/vaporizing process. Upon contact with the heating coils, the temperature of liquid portion 122 may increase and vaporize to provide the vapor portion 120. The vapor portion 120 may exit the vaporizing chamber 102 through the vapor stream output port 126, which may be in the upper portion of the shell 50. In some embodiments, a substantially constant flow of the liquid portion may be drawn through the liquid stream output port 128, which may be in the lower portion of the shell 50. Thereafter, at least a portion of the liquid portion may be mixed with steam 144 to further vaporize the liquid portion 122. The vapor portion 120 may be may be mixed with the vaporized liquid portion and steam 144, and the resulting vapor and stream mixture may be fed to the downstream processes, such as the cracking process.

In some embodiments, for a hydrocarbon feed stream 12 that is relatively light-boiling naphtha, for example, the liquid portion 122 drawn from the lower portion of the shell 50 may be substantially or completely shut-off. In such situations, the composition of the hydrocarbon feed stream 12 and the feed flow rate may be at least similar to the composition and flow rate of the vapor portion 120 exiting through the vapor-liquid separator 48. In some embodiments, after a period of operation (or periodically), a portion of the liquid portion 122 in the vaporizing chamber 102 may be drawn off, for example, to reduce the likelihood or prevent the potential buildup of heavier hydrocarbons in the lower portion of the shell 50. In some embodiments, the stirring device 154 may be operated to stir the liquid portion 122 to promote substantially uniform heating and/or to increase heat transfer between the heating elements 116 and the liquid portion 122.

In various embodiments of FIG. 3, the components may allow for the reduction and/or elimination of coking. In particular, the blow down devices, steam injections, and stirring devices may decrease coking in vaporization assemblies.

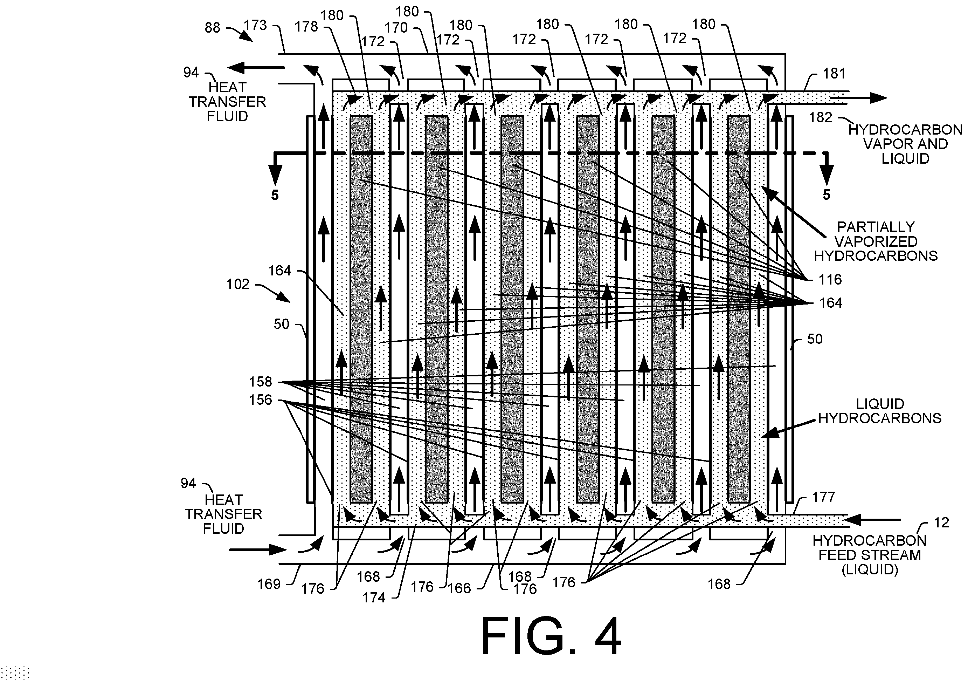

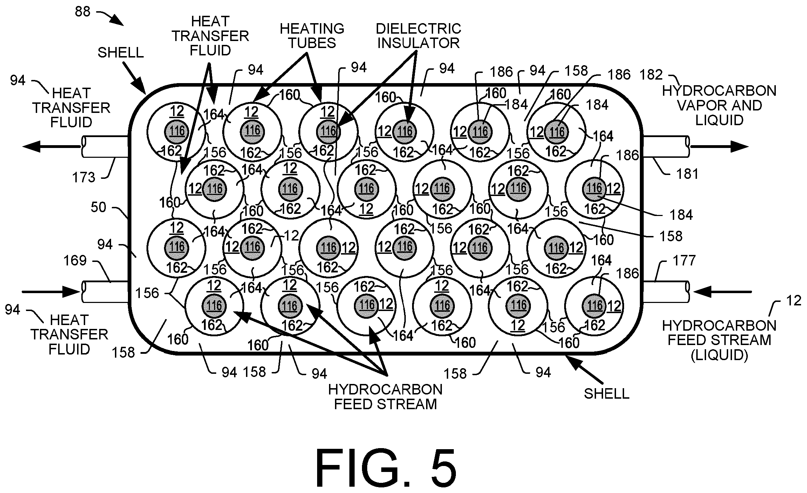

FIG. 4 schematically illustrates an example vaporizer assembly 88 including two heating modes according to according to embodiments of the disclosure. The embodiment of the vaporizer assembly 88 shown in FIG. 4 may enhance vaporization of a hydrocarbon feed stream 12, including, for example, liquid hydrocarbons having carbon numbers ranging from C2 to C15. As shown in FIG. 4, the vaporizer assembly 88 may include a shell 50 at least partially defining a vaporization chamber 102 and positioned to receive the hydrocarbon feed stream 12. The vaporizer assembly 88 may also include a plurality of heating tubes 156 positioned in the vaporization chamber 102, such that the shell 50 and the heating tubes 156 at least partially define therebetween one or more outer fluid passages 158 between the shell 50 and the plurality of heating tubes 156 to receive a heat transfer fluid 94. In some embodiments, the heat transfer fluid 94 may include steam and/or a heating medium including hot oil and/or flue gas. As schematically shown in FIG. 5, the heating tubes 156 may each include a tubular wall having an inner surface 162 and an outer surface 160, with the outer surface 160 of each of the heating tubes 156 facing the one or more outer fluid passages 158. The outer surface 160 of each of the heating tubes 156 faces outward toward the heat transfer fluid 94, and flow of the heat transfer fluid 94 through the outer passages 158 heats inner surfaces 162 of the heating tubes 156. In some embodiments, the inner surfaces 162 may be positioned for contact with a portion of the hydrocarbon feed stream 12 as it passes through the heating tubes 156 inside a respective inner surface 162 of the respective heating tube 156.

As shown in FIGS. 4 and 5, some embodiments of the vaporizer assembly 88 may also include a plurality of heating elements 116 positioned and configured to heat the hydrocarbon feed stream 12 as the hydrocarbon feed stream 12 flows through the heating tubes 156. In some embodiments, one or more of the heating elements 116 may be electrically-powered and positioned in the heating tubes 156 and at least partially defining, with the inner surface 162 of the heating tubes 156, feed passages 164 positioned to receive a portion of the hydrocarbon feed stream 12 therethrough and heat the portion of the hydrocarbon feed stream 12. For example, the hydrocarbon feed stream 12 may be heated by the heat transfer fluid 94 through the tubular walls of the heating tubes 156 and the heating elements 116 while flowing through the feed passages 164.

In this example manner, the hydrocarbon feed stream 12 flowing through the feed passages 164 may be exposed to dual-mode heating: a first mode in which the hydrocarbon feed stream 12 is heated by contacting a heating element 116 inside a respective heating tube 156 as it passes through the respective feed passage 164; and a second mode in which the hydrocarbon feed stream 12 is heated by contacting the inner surface 162 of the heating tube 156, the outer surface 160 of which is heated by the heat transfer fluid 94 passing between adjacent heating tubes 156. In some embodiments, the vaporizer assembly 88 may be configured in either a dual-mode configuration or a single-mode configuration, in which only one of the two modes of operation is utilized.

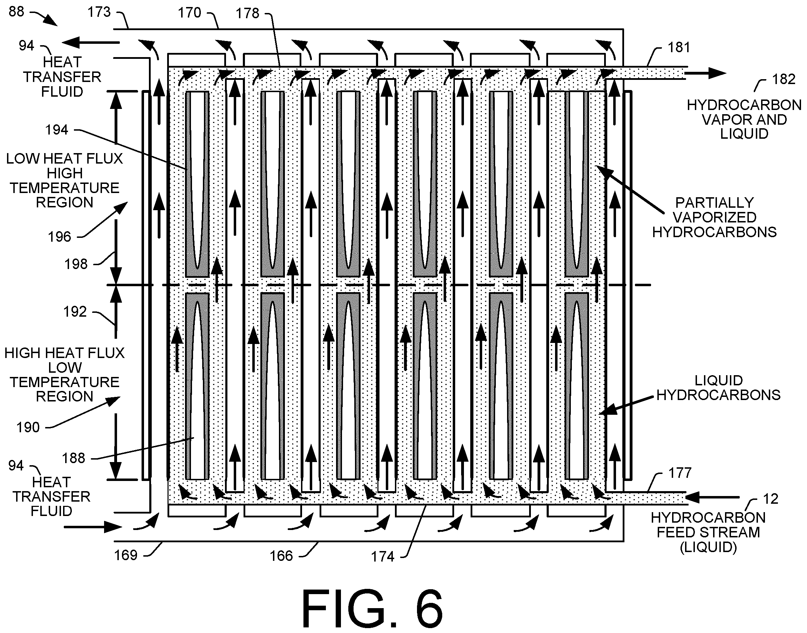

In some embodiments, a single heating element 116 may be received in each heating tube 156, for example, as shown in FIG. 4. In some embodiments, more than one heating element 116 may be received in each of the heating tubes 156, for example, as shown in FIG. 6. In embodiments having more than one heating element 116 received in each heating tube 156, the multiple heating elements 116 may be adjacent and/or parallel with respect to one another. In some embodiments of the vaporizer assembly 88, some heating tubes 156 may not include any heating elements 116 therein, while other heating tubes 156 may include one or more heating elements 116 therein.

As shown in FIG. 4, in some embodiments, the vaporizer assembly 88 may include a first transfer manifold 166 including a plurality of heat transfer inlet ports 168 at a lower portion of the shell 50 and configured to provide a flow path between a conduit 169 supplying the heat transfer fluid 94 and the outer fluid passages 158 between the heat transfer tubes 156. The vaporizer assembly 88 may also include a second heat transfer manifold 170 including a plurality of heat transfer outlet ports 172 at an upper portion of the shell 50 and configured to provide a flow path between the outer fluid passages 158 between the heat transfer tubes 156 and a conduit 173 for receiving the heat transfer fluid 94 after the heat transfer fluid 94 flows past the heating tubes 156, transferring heat to the hydrocarbon feed stream 12 as it passes through the feed passages 164.

As shown in FIG. 4, in some embodiments, the vaporizer assembly 88 may include a first feed passage manifold 174 including a plurality of feed inlet ports 176 at a lower portion of the shell 50 and configured to provide a flow path between a conduit 177 supplying the hydrocarbon feed stream 12 and the interior of the heat transfer tubes 156 (e.g., the feed passages 164). The vaporizer assembly 88 may also include a second feed passage manifold 178 including a plurality of feed passage outlet ports 180 at an upper portion of the shell 50 and configured to provide a flow path between one or more of the heat transfer tubes 156 (e.g., the feed passages) and a conduit 181 for receiving hydrocarbon vapor and liquid 182 provided after the hydrocarbon feed stream 12 flows past the heating elements 116 and past the heated inner surfaces 162 of the heating tubes 156, both of which may transfer heat to the hydrocarbon feed stream 12 as it passes through the feed passages 164.

Certain embodiments of the present invention may provide heat uniformly to fluids without significant temperature gradients, which may avoid overheating and coking of a feed stream.

As shown in FIGS. 5 through 7B, in some embodiments, the heating elements 116 may be electrically-insulated, for example, by a dielectric insulator material 184, which may at least partially define an outer surface 186 of the heating elements 116. FIG. 5 is a partial top section view of the vaporizer assembly shown in FIG. 4 viewed along line 5-5 according to embodiments of the disclosure. As shown in FIG. 5, each of the feed passages 164 may define an annular cross section defined by the outer surface 186 of the heating element 116 and the inner surface 162 of a corresponding heating tube 156. This example configuration may at least approximate at tube-in-tube configuration.

As shown in FIG. 4, as the hydrocarbon feed stream 12 passes through the feed passages 164, heat is transferred to the hydrocarbon feed stream 12, which may initially be in a substantially liquid form, heating the hydrocarbons, so that they become at least partially vaporized before exiting the vaporizer assembly 88 via the feed passage outlet ports 180 and the conduit 181 in the form of hydrocarbon vapor and/or hydrocarbon liquid. In the embodiment shown in FIG. 4, the heating elements 116 extend substantially the length of the feed passages 164 and may be configured to provide a substantially uniform heat flux along substantially the heating tube 156 length for heating the liquid hydrocarbons of the hydrocarbon feed stream 12 to provide combined vapor and liquid hydrocarbons.

In certain embodiments, varying voltage may be supplied to different heating elements to produce varying heat fluxes and temperature profiles. The varying voltages may allow for preheating and vaporization of a feed stream without arcing in dielectric insulation and/or use of medium voltage (approximately 4000V - approximately 6000V) to the inlet or feed side heating elements. These may enable relatively lower temperatures (approximately 60C - approximately 500C) and lower voltages (approximately 220V - approximately 480V) to be used for partially vaporized streams in a high temperature region (approximately 500C - approximately 700C).

FIG. 6 schematically illustrates another example vaporizer assembly 88 including two heating modes according to according to embodiments of the disclosure. As shown in FIG. 6, in some embodiments of the vaporizer assembly 88, one or more of the heating tubes 156 may include therein a first heating element 188 positioned at a first heating region 190 along a first portion of the heating tube length 192, and a second heating element 194 positioned at a second heating region 196 along a second portion of the heating tube length 198. In some embodiments, the first heating element 188 may be configured to provide a first heat flux, and the second heating element 194 may be configured to provide a second heat flux that less than the first heat flux. In some embodiments, the first heat flux may be for heating the liquid hydrocarbons of the hydrocarbon feed stream 12 as it passes through the first heating region 190 to provide combined vapor and liquid hydrocarbons, and in some embodiments, the second heat flux may be for heating the combined vapor and liquid hydrocarbons as it passes through the second heating region 196 to further heat the combined vapor and liquid hydrocarbons before it exits via the conduit 181. Other heat flux combinations are contemplated. In some embodiments, the first heating element 188 may be configured to be powered by a first voltage, and the second heating element 196 may be configured to be powered by a second voltage that is lower than the first voltage. For example, the first voltage may range from about 4,000 volts to about 6,000 volts, and the second voltage may range from about 300 volts to about 660 volts (e.g., about 480 volts). Other voltage combinations are contemplated.

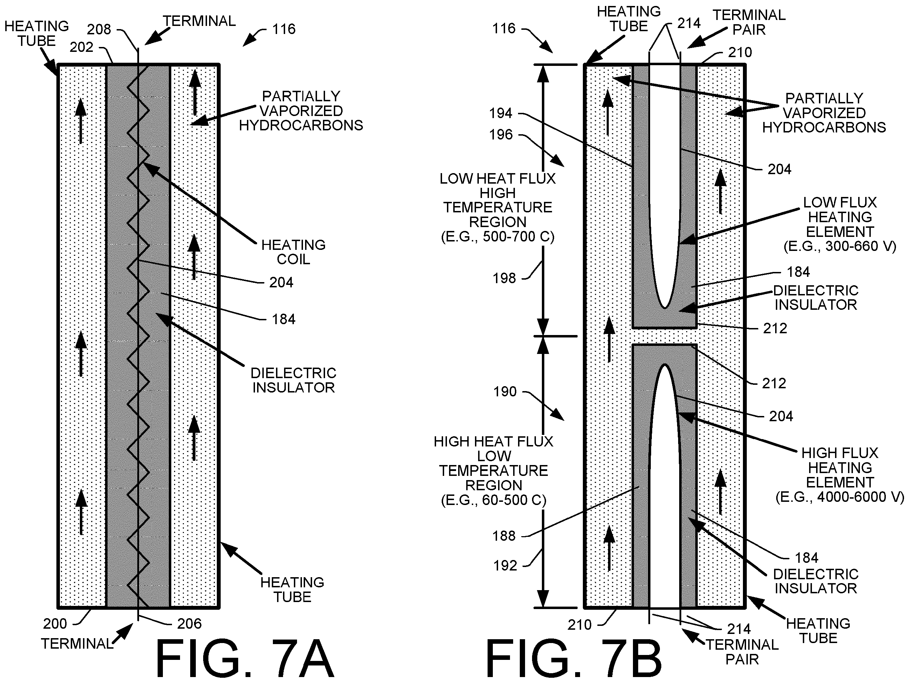

FIG. 7A is a partial side section view of a portion of the example vaporizer assembly 88 shown in FIGS. 4 and 5 according to embodiments of the disclosure. As shown in FIG. 7A, in some embodiments, the heating elements 116 may include a first heating element end 200 and a second heating element end 202 defining a heating element length. In the embodiment shown in FIG. 7A, the heating element 116 includes a heating coil 204 (e.g., an electrically-powered heating coil), a first terminal 206 at the first heating element end 200, and a second terminal 208 at the second heating element end 202. The first and second terminals 206 and 208 may be configured to be electrically connected to an electrical power source to supply electrical power to the heating coil 204 to heat the heating element 116. As shown in FIG. 7A, the heating coil 204 may be substantially covered and/or surrounded by the dielectric insulator material 184 to electrically insulate the heating coil 204 from the hydrocarbon feed stream 12 passing through the feed passages 164 (see FIG. 4).

FIG. 7B is a partial side section view of a portion of the example vaporizer assembly 88 shown in FIG. 6 according to embodiments of the disclosure. As shown in FIG. 7B, in some embodiments, the heating tubes 156 may include therein the first heating element 188 and the second heating element 194, which may be axially aligned or co-axial with respect to one another, for example, as shown. In the embodiment shown in FIG. 7B, the heating elements 188 and 194 each include a heating coil 204 (e.g., an electrically-powered heating coil). The first and second heating elements 188 and 194 may include a first heating element end 210 and a second heating element end 212 defining a heating element length, and the heating elements 188 and 194 may each include a terminal pair 214 at the first heating element end 210. The terminal pairs 214 may be configured to be electrically connected to an electrical power source to supply electrical power to the heating coil 204 to heat the heating elements 188 and 194. As shown in FIG. 7B, the heating coil 204 may approximate an elongated U-shape, which may be substantially covered and/or surrounded by the dielectric insulator material 184 to electrically insulate the heating coil 204 from the hydrocarbon feed stream 12 passing through the feed passages 164 (see FIG. 6).

In some embodiments consistent with the vaporizer assemblies shown in FIGS. 4-7B, a combination of electrically-powered heating elements and a heat transfer fluid (e.g., steam and/or other heat medium) may result in a relatively compact and/or relatively more efficient vaporizer assembly. As noted above, heat may be transferred to the hydrocarbon feed stream 12 through the walls of the heating tubes 156 and the outer surface of the heating elements 116 to heat the hydrocarbon feed stream 12 using two heat sources, the heat transfer fluid 94 and the heating elements 116. This example configuration and heating process may result in relatively more uniform heating and/or relatively faster heating and vaporization as compared to a conventional shell and tube vaporizer. In some embodiments, a heating medium or media, may include steam, and the steam (or other heating media) may be supplemented or replaced with hot oil or other heat transfer media.

In some embodiments consistent with the vaporizer assembly 88 shown in FIGS. 6 and 7B, heating may be performed in two (or more) different heating regions. For example, the first heating region 190 may predominantly heat hydrocarbon in liquid form using medium voltage heating coils, for example, at a heat flux of about 108,5 kW/m² (70 W/in²). In some embodiments, the maximum temperature attained in the first heating region 190 may be limited to about 400 degrees C, for example, due at least in part to limitations of the dielectric properties of dielectric insulating material 184 surrounding the heating coil 204. In some embodiments, the second heating region 196 may be heated by a lower voltage heating coil 204 (e.g., about 480 V), which may be capable of heating the hydrocarbon feed stream 12 to about 700 degrees C. In some embodiments, vaporization of liquid hydrocarbons (e.g., naphtha) may occur toward the upper part of the heating tubes 156, where the flow is two-phase (e.g., liquid and vapor). The heat flux in this region may be relatively lower, for example, about 31,0 kW/m² (20 W/in²), due at least in part to the presence a significant quantity of vapor in the fluid. As a result, a heating coil 204 having a relatively lower voltage and/or a relatively longer length may be provided, and/or, in some embodiments, more than one heating coil 204 may be included in a heating tube 156, which may enhance surface for transferring heat.

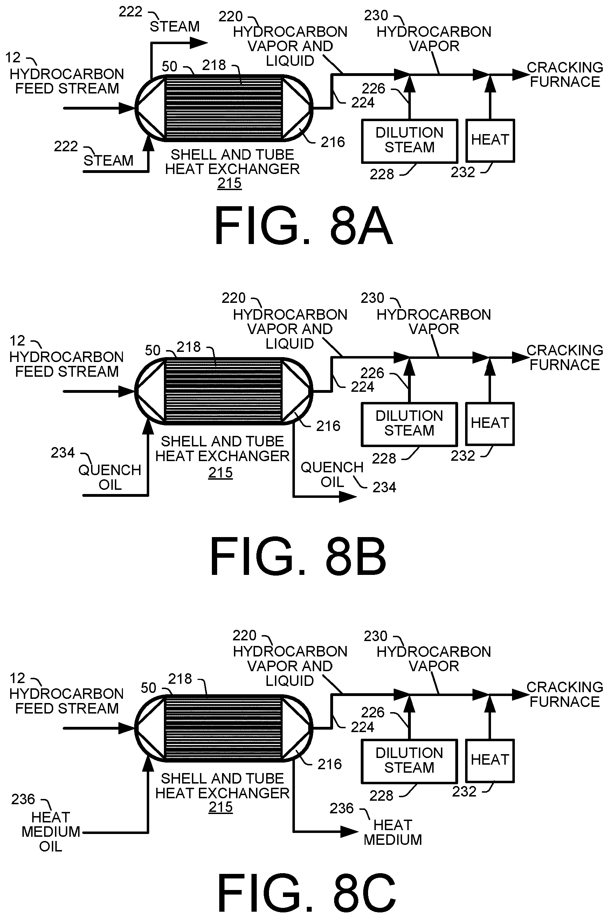

FIG. 8A schematically illustrates a further example vaporizer assembly 88 to enhance vaporization of a hydrocarbon feed stream 12, according to embodiments of the disclosure. As shown in FIG. 8A, in some embodiments, the vaporizer assembly 88 may include a shell and tube heat exchanger 215 including a shell 50 at least partially defining a heat transfer chamber 216, and a plurality of heat transfer tubes 218 positioned in the shell 50. The shell 50 or the heat transfer tubes 218 may be positioned and configured to receive the hydrocarbon feed stream 12, and the other of the shell 50 or the heat transfer tubes 218 may be positioned and configured to receive a heat transfer medium, such that the heat transfer medium heats the hydrocarbon feed stream 12 to provide partially vaporized hydrocarbons and liquid hydrocarbons 220. In some embodiments, as shown in FIG. 8A, the heat transfer medium may include steam 222. In some embodiments, the heat transfer medium may be devoid of flue gas from a convection section of a steam cracker.

As shown in FG. 8A, some embodiments of the vaporizer assembly 88 may include an outlet conduit 224 positioned to receive the partially vaporized hydrocarbons and liquid hydrocarbons 220. The vaporizer assembly 88 also may include a steam conduit 226 in flow communication with the outlet conduit 224 and positioned to supply dilution steam 228 to the partially vaporized hydrocarbons and liquid hydrocarbons 220 to further vaporize the partially vaporized hydrocarbons and liquid hydrocarbons 220 to provide substantially fully vaporized hydrocarbons 230. As shown in FIG. 8A, the vaporizer assembly 88 may include a heating device 232 positioned downstream of the steam conduit 226 and configured to receive the substantially fully vaporized hydrocarbons 230. In some embodiments, the heating device 232 may be configured to heat the substantially fully vaporized hydrocarbons 230 to a cracking furnace inlet temperature. The heating device 232 may include an electrically-powered heater.

In some embodiments consistent with FIG. 8A, hydrocarbons in the hydrocarbon feed stream 12 (e.g., naphtha) may be vaporized in three steps, with the heat source being steam, for example, not hot flue gas. For example, the hydrocarbon feed stream 12 may be partially vaporized in the heat transfer tubes 218. The heat transfer medium, for example, the steam 222 shown in FIG. 8A, may be condensed in the shell 50 to provide heat to heat the hydrocarbon feed stream 12 in the heat transfer tubes 218. Thereafter, the partially vaporized hydrocarbon feed stream 220 may be mixed with the dilution steam 228 to substantially complete the vaporization. The substantially or fully vaporized feed 230 may thereafter be heated to inlet temperature of the cracking furnace, for example, via heat integration (e.g., against furnace effluent in a TLE-like device) and/or via a dedicated heater, such as an electrically-powered heater. In some embodiments, steam used for the partial vaporization may be provided by a number of steam sources, such as, for example, the steam may be generated against a hot process stream (e.g., hot furnace effluent) and/or in an electric steam generator, and/or it may be provided as part of a broader facility-wide steam system.

FIG. 8B schematically illustrates still a further example vaporizer assembly 88 according to embodiments of the disclosure. As shown in FIG. 8B, some embodiments of the vaporizer assembly 88 may be similar to the embodiment shown in FIG. 8A, except that the heat transfer medium supplied to the shell 50 includes hot quench oil 234 instead of (or in addition to) steam 222. For example, the hot quench oil 234 may be supplied via a quench tower. In embodiments consistent with the embodiment shown in FIG. 8B, the partial hydrocarbon vaporization may occur in the heat transfer tubes 218 as hot quench oil 234 is cooled to provide the heat.

FIG. 8C schematically illustrates yet another example vaporizer assembly 88 according to embodiments of the disclosure. As shown in FIG. 8C, some embodiments of the vaporizer assembly 88 may be similar to the embodiment shown in FIG. 8A, except that the heat transfer medium supplied to the shell 50 includes heat medium 236 (which may be, or include, oil) instead of (or in addition to) steam 222 (and/or quench oil 234). The heat medium oil 236 may be heated by, for example, a hot process stream present in the system 10, such as hot furnace effluent in a TLE-like exchanger, and/or the heat medium oil 236 may be heated in a dedicated heat medium oil heater (e.g., an electrically-powered heater). In some embodiments, the heat medium oil 236 may be heated using a facility-wide heat medium system.

In certain embodiments, an annular region between shell and tube may provide a piston flow of fluids that avoids or reduces significant temperature and velocity gradients coupled with shortest characteristic heating lengths to achieve a coking-free or reduced coking vaporizer for heavy hydrocarbon feeds.

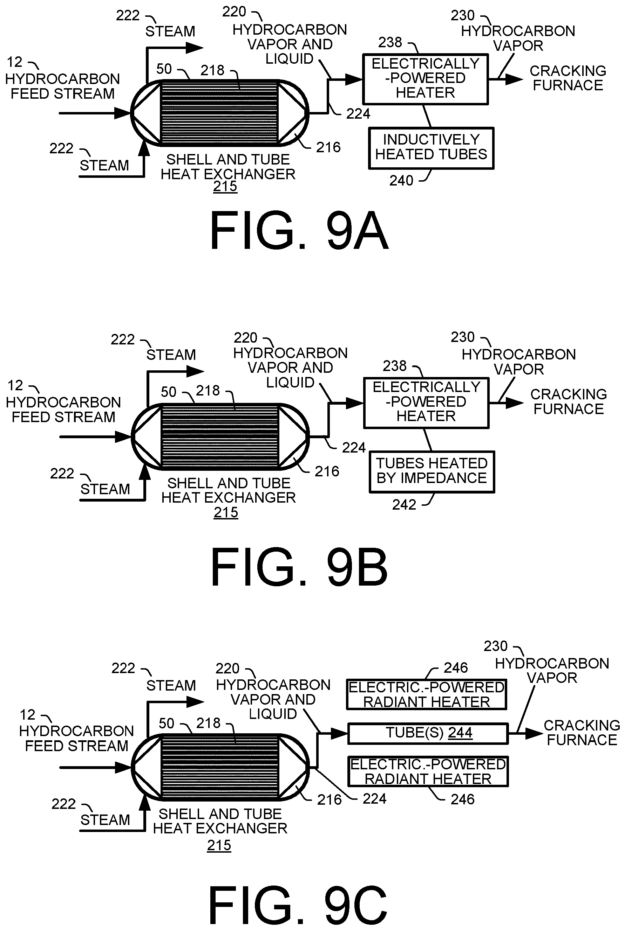

FIG. 9A schematically illustrates yet a further example vaporizer assembly 88 according to embodiments of the disclosure. In the embodiment shown in FIG. 9A, the vaporizer assembly 88 may include a shell and tube heat exchanger 215 including a shell 50 at least partially defining a heat transfer chamber 216, and a plurality of heat transfer tubes 218 positioned in the shell 50. The shell 50 or the heat transfer tubes 218 may be positioned and configured to receive the hydrocarbon feed stream 12, and the other of the shell 50 or the heat transfer tubes 218 may be positioned and configured to receive a heat transfer medium, such that the heat transfer medium heats the hydrocarbon feed stream 12 to provide partially vaporized hydrocarbons and liquid hydrocarbons 220. In some embodiments, as shown in FIG. 9A, the heat transfer medium may include steam 222. In some embodiments, the heat transfer medium may be devoid of flue gas from a convection section of a steam cracker.

As shown in FG. 9A, some embodiments of the vaporizer assembly 88 may include an outlet conduit 224 positioned to receive the partially vaporized hydrocarbons and liquid hydrocarbons 220. The vaporizer assembly 88 also may include an electrically-powered heater 238 in flow communication with the outlet conduit 224 and positioned to heat the partially vaporized hydrocarbons and liquid hydrocarbons 220 to further vaporize the partially vaporized hydrocarbons and liquid hydrocarbons 220 to provide substantially fully vaporized hydrocarbons 230. For example, the electrically-powered heater 238 may include a plurality of inductively-heated tubes 240 positioned to receive the partially vaporized hydrocarbons and liquid hydrocarbons 220 therethrough. For example, the inductively-heated tubes 240 may include a plurality of tubes about which one or more electrically-powered induction coils may be wound, such that when current is passed through the one or more induction coils, the surface temperature of the tubes 240 increases, providing heat to increase the temperature of the partially vaporized hydrocarbons and liquid hydrocarbons 220 as it passes through the tubes 240. The tubes 240 may be formed from materials that are capable of being inductively heated in this example manner.

In some embodiments, consistent with the vaporizer assembly 88 shown in FIG. 9A, the electrically-powered heater 238 may include heat transfer tubes positioned to cause the heat transfer tubes to heat the hydrocarbon feed stream 12 as the hydrocarbon feed stream 12 passes through the heat transfer tubes to provide more completely vaporized hydrocarbons, for example, as explained above. In some embodiments, heating elements, such as the inductive coils, may be electrically powered.

FIG. 9B schematically illustrates still a further example vaporizer assembly 88 according to embodiments of the disclosure. As shown in FIG. 9B, some embodiments of the vaporizer assembly 88 may be similar to the embodiment shown in FIG. 9A, except that the electrically-powered heater 238 includes tubes heated by impedance 242 instead of (or in addition to) the inductively-heated tubes 240. For example, in some embodiments, electric current may be passed through the tubes 242, such that impedance in the tubes 242 causes the temperature of the surface of the tubes 242 to increase to heat the hydrocarbon feed stream 12 as the hydrocarbon feed stream 12 passes through the tubes 242 to provide more completely vaporized hydrocarbons, for example, as explained above. In some embodiments, heating elements, such as current carriers to the tubes, may be electrically powered. In some embodiments, the material forming the tubes 242 may be selected to provide a desired heat flux resulting from passing current through the tubes 242.

FIG. 9C schematically illustrates yet another example vaporizer assembly 88 according to embodiments of the disclosure. As shown in FIG. 9C, some embodiments of the vaporizer assembly 88 may be similar to the embodiment shown in FIG. 9A, except that the electrically-powered heater 238 includes tubes 244 heated by one or more electrically-powered radiant heaters 246 instead of (or in addition to) the inductively-heated tubes 240 (and/or tubes 242 heated by impedance). For example, in some embodiments, the electrically-powered radiant heaters 246 may include electrically-powered heating elements configured to radiate heat when activated, and transfer via radiation heat transfer to the tubes 244 through which partially vaporized hydrocarbons and liquid hydrocarbons 220 pass to more fully vaporize the hydrocarbons. Various arrangements and/or orientations of the tubes and the electrically-powered radiant heaters are contemplated to achieve heating.

In some embodiments, the system 10 may include a controller configured to control operation of one or more components of the system 10, for example, as will be understood by those skilled in the art. For example, the system 10 may include a plurality of temperature sensors, pressure sensors, flow rate sensors, etc., in communication with the controller, and the controller may use control logic in the form of computer software and/or hardware programs to make control decisions associated with controlling operation of the one or more components. In some embodiments, the system 10 may include valves associated with the lines and/or conduits, and the controller may communicate control signals based at least in part on the control decisions to actuators associated with the valves to control the flow of fluid (e.g., gases and/or liquids) and/or heat, and the actuators may be operated according to the communicated control signals to operate the parts of the system 10. In some examples, the controller may be supplemented or replaced by human operators at least partially manually controlling the system 10 to meet desired performance parameters based at least in part on efficiency considerations and/or emissions considerations.

Having now described some illustrative embodiments of the disclosure, it should be apparent to those skilled in the art that the foregoing is merely illustrative and not limiting, having been presented by way of example only. Numerous modifications and other embodiments are within the scope of one of ordinary skill in the art and are contemplated as falling within the scope of the disclosure. In particular, although many of the examples presented herein involve specific combinations of method acts or system elements, it should be understood that those acts and those elements may be combined in other ways to accomplish the same objectives. Those skilled in the art should appreciate that the parameters and configurations described herein are exemplary and that actual parameters and/or configurations will depend on the specific application in which the systems and techniques of the invention are used. Those skilled in the art should also recognize or be able to ascertain, using no more than routine experimentation, equivalents to the specific embodiments of the invention. It is, therefore, to be understood that the embodiments described herein are presented by way of example only and that, within the scope of any appended claims and equivalents thereto, the embodiments of the disclosure may be practiced other than as specifically described.

An example hydrocarbon cracking system A may include a feed conduit positioned to supply a feed stream including a liquid hydrocarbon feed stream, the liquid hydrocarbon feed stream including carbon numbers ranging from C2 to C15. The example system A may further include a pre-heating assembly in flow communication with the feed conduit and configured to heat the feed stream to provide a pre-heated feed stream including one or more of a vaporized portion of the pre-heated feed stream or a pre-heated liquid hydrocarbon feed stream, and a remaining liquid portion of the feed stream. The pre-heating assembly may include one of: an electrically-powered heater; an electrically-powered heater and a steam heater; or an electrically-powered heater and heat transfer fluid positioned to heat the feed stream. The pre-heating assembly further may include a flash device positioned to receive the pre-heated feed stream and separate one or more of a vaporized portion of the pre-heated feed stream or the pre-heated liquid hydrocarbon feed stream from the remaining liquid portion of the feed stream to supply a flash device outlet stream. The pre-heating assembly also may include a steam cracking furnace positioned to receive the flash device outlet stream and heat the flash device outlet stream to provide a product stream comprising cracked hydrocarbons.

The example system A above, further including an electrically-powered diluent or dilution steam heater configured to heat diluent steam to provide heated diluent steam and a steam conduit in flow communication with the flash device to supply the heated diluent steam to the flash device.

The example system A above, wherein the diluent steam is heated independently from the feed stream.

The example system A above, wherein the diluent steam includes one or more of water, hydrogen, or methane.

The example system A above, further including a distillation section in flow communication with the steam cracking furnace, the distillation section being configured to separate cracked hydrocarbons of the product stream. The example system A may also include a recycle conduit providing flow communication between the distillation section and the flash device to supply one or more of wash oil or quench oil from the distillation section to the flash device.

The example system A above, wherein the flash device includes a modified heavy oil processing scheme (HOPS) device.

The example system A above, wherein the flash device includes an electrically-powered heater.

The example system A above, wherein the pre-heating assembly is heated independently from the steam cracking furnace.

An example vaporizer assembly B to vaporize a naphtha feed stream may include a vapor-liquid separator positioned to vaporize a portion of naphtha of the naphtha feed stream to provide a vaporized portion, and separate the vaporized portion from a liquid portion of the naphtha feed stream. The example assembly B may also include a liquid heater in flow communication with the vapor-liquid separator and positioned to heat a heat transfer fluid via the heat transfer fluid directly contacting naphtha of the naphtha feed stream, the liquid heater being electrically powered, and the heat transfer fluid having a working range ranging between about 20 degrees C and about 550 degrees C. The example assembly B may further include a circulation conduit providing flow communication between the liquid heater and the vapor-liquid separator to circulate the heat transfer fluid between the liquid heater and the vapor-liquid separator.

The example assembly B above, wherein the vapor-liquid separator includes one or more separation trays and/or one or more random packings and/or one or more structured packings positioned to receive at least a portion of the naphtha feed stream and separate the vaporized portion from the liquid portion of the at least a portion of the naphtha feed stream, the at least a portion of the naphtha feed stream and the heat transfer fluid being supplied to the vapor-liquid separator at one or more of above, below, or at the one or more separation trays, the one or more random packings, and/or the one or more structured packings.

The example assembly B above, wherein the circulation conduit includes a plurality of input locations along the circulation conduit and positioned to receive a plurality of feed stream inputs of the naphtha feed stream.

The example assembly B above, further including a mixing device in flow communication with the circulation conduit, the mixing device being positioned to enhance contact between the naphtha feed stream and the heat transfer fluid, and including one or more of a static mixer, an impeller, a distributor, a nozzle, an ejector, or a mixing pump.

The example assembly B above, further including an ejector in flow communication with the circulation conduit, the ejector being positioned to mix and pump the heat transfer fluid through the circulation conduit.

The example assembly B above, further including a pre-heater in flow communication with and positioned upstream relative to the vapor-liquid separator, the pre-heater being configured to heat the naphtha feed stream upstream relative to the vapor-liquid separator.

The example assembly B above, further including an injector in flow communication with and upstream relative to the vapor-liquid separator, the injector being configured to inject steam into the vapor-liquid separator.

The example assembly B above, further including a liquid conduit in flow communication with the circulation conduit, the liquid conduit being positioned to draw liquid from the vaporizer assembly.

The example assembly B above, wherein one or more of the vapor-liquid separator, the liquid heater, or the circulation conduit are configured to create a thermo-syphon effect to at least partially assist flow between the liquid heater and the vapor-liquid separator.

The example assembly B above, further including a pump in flow communication with the circulation conduit and positioned to circulate the heat transfer fluid through the circulation conduit, the liquid heater, and the vapor-liquid separator.

The example assembly B above, wherein the heat transfer fluid is selected from the group consisting of pyrolysis quench oil, pan oil, fuel oil product, kerosene, diesel, gasoils, hydro-treated gasoils, hydrocracked gasoils, naphthalene, tar, coker oils, lube oils, residual un-vaporized components from the feed stream, heat transfer fluids, silicone oils, ionic liquids, molten metals, flowable slurries, particulate mixtures, molten salts, commercially synthesized heat transfer fluids, and combinations thereof.

An example vaporizer assembly C to enhance vaporization of a naphtha feed stream may include a vapor-liquid separator positioned to receive a feed stream including naphtha. The vapor-liquid separator may be positioned to vaporize at least a portion of the feed stream and separate a vapor portion of the feed stream from a liquid portion of the feed stream. The vapor-liquid separator may include a shell at least partially defining a vaporizing chamber positioned to receive the feed stream, a feed stream input port in flow communication with the shell to supply the feed stream into the vaporizing chamber, and a heating element positioned in an interior of the vaporizing chamber to be at least partially submerged in naphtha. The heating element may include electrically-insulated heating coils, the electrically-insulated heating coils being positioned in the shell, such that naphtha submerges the electrically-insulated heating coils during heating of the naphtha in the vaporizing chamber. The vapor-liquid separator may also include a stirring device positioned inside the shell to stir the naphtha during heating of the naphtha, a vapor stream output port in flow communication with the vaporizer chamber and positioned to receive the vapor portion, and a liquid stream output port in flow communication with the vaporizer chamber and positioned to receive the liquid portion. The example assembly C may further include a vapor conduit in flow communication with the vapor stream output port, a liquid conduit in flow communication with the liquid stream output port, and a liquid stream valve in flow communication with the liquid conduit. The liquid stream valve may have an open position allowing the liquid portion to flow from the liquid stream output port and through the liquid conduit and a closed position preventing the liquid portion from flowing through the liquid conduit.

The example assembly C above, further including a blow-down in flow communication with the liquid conduit, and positioned to remove heavy components of the liquid portion from the vapor-liquid separator.

The example assembly C above, further including a steam injector in flow communication with the liquid conduit and positioned to inject steam into the liquid conduit to vaporize at least a portion of the liquid portion in the liquid conduit to provide steam and vaporized liquid, and a steam conduit in flow communication with the steam injector and the vapor conduit and configured to supply the steam and vaporized liquid to the vapor conduit.

The example assembly C above, further including a stirring device positioned inside the shell to stir the naphtha during heating of the naphtha.

An example vaporizer assembly D to enhance vaporization of a hydrocarbon feed stream including liquid hydrocarbons having carbon numbers ranging from C2 to C15 may include a shell defining a vaporizer chamber and positioned to receive the hydrocarbon feed stream, and a plurality of heating tubes positioned in the vaporizer chamber, such that the shell and the heating tubes at least partially define therebetween one or more outer fluid passages to receive a heat transfer fluid. Each of the plurality of heating tubes may include a tubular wall having an outer surface positioned for contact with the heat transfer fluid and an inner surface positioned for contact with a portion of the hydrocarbon feed stream. The example assembly D may further include a plurality of heating elements positioned to heat the hydrocarbon feed stream, one or more of the plurality of heating elements being electrically-powered and positioned in one or more of the plurality of heating tubes and at least partially defining, with an interior surface of the one or more of the plurality of heating tubes, feed passages positioned to receive a portion of the hydrocarbon feed stream therethrough and heat the portion of the hydrocarbon feed stream. The hydrocarbon feed stream may be heated by the heat transfer fluid through the tubular walls of the heating tubes and the heating elements while flowing through the feed passages.

The example assembly D above, wherein one or more of the plurality of heating elements are electrically-insulated and define an outer heating element surface, each of the feed passages defining an annular cross-section defined by the outer heating element surface and an inner surface of a corresponding one of the plurality of heating tubes.

The example assembly D above, wherein the heat transfer fluid includes one or more of steam or a heating medium including one or more of hot oil or flue gas, and flow of the heat transfer fluid through the one or more outer fluid passages heats the inner surfaces of the one or more heating tubes.

The example assembly D above, wherein one or more of the plurality of heating tubes include a first end and a second end defining a heating tube length, and one or more of the heating tubes including therein a first heating element positioned at a first heating region along a first portion of the heating tube length and a second heating element positioned at a second heating region along a second portion of the heating tube length.

The example assembly D above, wherein the first heating element is configured to provide a first heat flux and the second heating element is configured to provide a second heat flux less than the first heat flux, the first heat flux for heating the liquid hydrocarbons of the hydrocarbon feed stream to provide combined vapor and liquid hydrocarbons, and the second heat flux for heating the combined vapor and liquid hydrocarbons.

The example assembly D above, wherein the first heating element is configured to be powered by a first voltage and the second heating element is configured to be powered by a second voltage lower than the first voltage.

The example assembly D above, wherein one or more of the plurality of heating tubes include a first end and a second end defining a heating tube length, and one or more of the plurality of heating tubes includes therein a first heating element providing a substantially uniform heat flux along substantially the heating tube length for heating the liquid hydrocarbons of the hydrocarbon feed stream to provide combined vapor and liquid hydrocarbons.

The example assembly D above, wherein one or more of the plurality of heating elements include a first heating element end and a second heating element end defining a heating element length, and one or more of the plurality of heating elements includes a terminal pair at one of the first heating element end or the second heating element end.

The example assembly D above, wherein one or more of the plurality of heating elements include a first heating element end and a second heating element end defining a heating element length, and one or more of the plurality of heating elements includes a first terminal of a terminal pair at the first heating element end and a second terminal of the terminal pair at the second heating element end.

The example assembly D above, wherein one or more of the plurality of heating tubes include a first end and a second end defining a heating tube length, the shell and the first end of the plurality of heating tubes being configured to receive the heat transfer fluid and the hydrocarbon feed stream, and the shell and the second end of the plurality of heating tubes being configured for exit of the heat transfer fluid and a hydrocarbon vapor and liquid mixture.

An example vaporizer assembly E to enhance vaporization of a hydrocarbon feed stream including liquid hydrocarbons may include a shell defining a heat transfer chamber and a plurality of heat transfer tubes positioned in the shell, one of the shell or the plurality of heat transfer tubes being positioned to receive the hydrocarbon feed stream and the other of the shell or the plurality of heat transfer tubes being positioned to receive a heat transfer medium, such that the heat transfer medium heats the hydrocarbon feed stream to provide partially vaporized hydrocarbons and liquid hydrocarbons. The heat transfer medium may be devoid of flue gas from a convection section of a steam cracker and may include one or more of steam, quench oil from a quench tower, or heat medium oil. The example assembly E may further include a heating device including an electrically-powered heater and positioned to receive the partially vaporized hydrocarbons and liquid hydrocarbons. The heating device may be configured to heat the partially vaporized hydrocarbons and liquid hydrocarbons to a cracking furnace inlet temperature.

The example assembly E above, further including an outlet conduit positioned to receive the partially vaporized hydrocarbons and liquid hydrocarbons, and a steam conduit in flow communication with the outlet conduit and positioned to supply dilution steam to the partially vaporized hydrocarbons and liquid hydrocarbons to further vaporize the partially vaporized hydrocarbons and liquid hydrocarbons to provide substantially fully vaporized hydrocarbons.

The example assembly E above, wherein the heating device is positioned downstream of the steam conduit to receive the substantially fully vaporized hydrocarbons, the heating device being configured to heat the substantially fully vaporized hydrocarbons to a cracking furnace inlet temperature.

An example vaporizer assembly F to enhance vaporization of a hydrocarbon feed stream including liquid hydrocarbons may include one or more heat transfer tubes positioned to receive the hydrocarbon feed stream, and one or more heating elements associated with the one or more heat transfer tubes and positioned to cause the one or more heat transfer tubes to heat the hydrocarbon feed stream as the hydrocarbon feed stream passes through the one or more heat transfer tubes to provide partially vaporized hydrocarbons and liquid hydrocarbons. The one or more heating elements may be electrically powered, and heating of the one or more heat transfer tubes may be independent from flue gas from a convection section of a steam cracker.

The example assembly F above, wherein the one or more heating elements include one or more induction coils extending around the one or more heat transfer tubes and positioned to induce heat into the one or more heat transfer tubes.

The example assembly F above, wherein the one or more heating elements include one or more electrical conductors electrically connected to the one or more heat transfer tubes and positioned to pass electrical current through the one or more heat transfer tubes.

The example assembly F above, wherein the one or more heating elements may include one or more radiative heating elements, the radiative heating elements being positioned relative to the one or more heat transfer tubes to heat the one or more heat transfer tubes via radiative heat transfer.

The example assembly F above, further including an outlet conduit positioned to receive the partially vaporized hydrocarbons and liquid hydrocarbons, and a steam conduit in flow communication with the outlet conduit and positioned to supply dilution steam to the partially vaporized hydrocarbons and liquid hydrocarbons to further vaporize the partially vaporized hydrocarbons and liquid hydrocarbons to provide substantially fully vaporized hydrocarbons.

The example assembly F above, further including a heating device positioned downstream of the steam conduit to receive the substantially fully vaporized hydrocarbons, the heating device being electrically-powered and configured to heat the substantially fully vaporized hydrocarbons to a cracking furnace inlet temperature

Furthermore, the scope of the present disclosure shall be construed to cover various modifications, combinations, additions, alterations, etc., above and to the above-described embodiments, which shall be considered to be within the scope of this disclosure.

## Claims

1. A hydrocarbon cracking system, the system comprising:
a) a feed conduit positioned to supply a feed stream comprising one of a naphtha feed stream or a liquid hydrocarbon feed stream, the one of the naphtha feed stream or the liquid hydrocarbon feed stream comprising carbon numbers ranging from C2 to C15;
b) a pre-heating assembly comprising an electrically-powered heater, wherein the pre-heating assembly is in flow communication with the feed conduit and configured to heat the feed stream to provide i) a pre-heated feed stream comprising one or more of a vaporized portion of the pre-heated feed stream or a pre-heated liquid hydrocarbon feed stream, and ii) a remaining liquid portion of the feed stream;
c) a flash device positioned to receive the pre-heated feed stream and separate one or more of the vaporized portion of the pre-heated feed stream or the pre-heated liquid hydrocarbon feed stream from the remaining liquid portion of the feed stream to supply a flash device outlet stream;
d) a liquid conduit to remove at least a portion of the remaining liquid portion of the feed stream;
e) a mixer for adding superheated dilution steam to the at least a portion of the remaining liquid portion of the feed stream to vaporize at least a portion of the remaining liquid portion of the feed stream to supply a mixer outlet stream; and
f) an electrically-powered steam cracking furnace positioned to receive the flash device outlet stream and the mixer outlet stream, and heat the combined flash device outlet stream and mixer outlet stream to provide a product stream comprising cracked hydrocarbons.

2. The system according to claim 1, wherein the pre-heating assembly further comprises one or more of a steam heater or a heat transfer fluid positioned to heat the feed stream.

3. The system according to claim 1 or claim 2, wherein one or more of:
the hydrocarbon cracking system further comprises an electrically-powered dilution steam heater configured to heat dilution steam to provide heated dilution steam and a steam conduit in flow communication with the flash device to supply the heated dilution steam to the flash device.

4. The system according to any of the preceding claims, further comprising:
a distillation section in flow communication with the steam cracking furnace, the distillation section configured to separate cracked hydrocarbons of the product stream; and
a recycle conduit providing flow communication between the distillation section and the flash device to supply one or more of wash oil or quench oil from the distillation section to the flash device.

5. The system according to any of the preceding claims, wherein the flash device is a vapor-liquid separator comprising a liquid heater in flow communication with the vapor-liquid separator and positioned to heat a heat transfer fluid via the heat transfer fluid directly contacting naphtha of the naphtha feed stream to heat the naphtha, the liquid heater being electrically powered and the heat transfer fluid having a working range ranging between about 20 degrees C and about 550 degrees C; and a circulation conduit providing flow communication between the liquid heater and the vapor-liquid separator to circulate the heat transfer fluid between the liquid heater and the vapor-liquid separator.

6. The system according to claim 5, wherein the vapor-liquid separator comprises one or more of one or more separation trays, one or more random packings, or one or more structured packings positioned to receive at least a portion of the feed stream and separate the vaporized portion from the liquid portion of the at least a portion of the feed stream, the at least a portion of the feed stream and the heat transfer fluid being supplied to the vapor-liquid separator at one or more of above, below, or at the one or more of the one or more separation trays, the one or more random packings, or the structured packings.

7. The system according to any of claim 5 or claim 6, wherein the circulation conduit comprises a plurality of input locations along the circulation conduit and positioned to receive a plurality of feed stream inputs of the naphtha feed stream.

8. The system according to any of claims 5-7, further comprising one or more of:
a mixing device in flow communication with the circulation conduit, the mixing device positioned to enhance contact between the feed stream and the heat transfer fluid, and comprising one or more of a static mixer, an impeller, a distributor, a nozzle, an ejector, or a mixing pump;
an ejector in flow communication with the circulation conduit, the ejector positioned to mix and pump the heat transfer fluid through the circulation conduit; or
an injector in flow communication with and upstream relative to the vapor-liquid separator, the injector being configured to inject steam into the vapor-liquid separator.

9. The system according to any of claims 1-4, wherein the flash device is a vapor-liquid separator comprising:
a shell at least partially defining a vaporizing chamber positioned to receive the feed stream;
a feed stream input port in flow communication with the shell to supply the feed stream into the vaporizing chamber;
a heating element positioned in an interior of the vaporizing chamber to be at least partially submerged in naphtha, the heating element comprising electrically-insulated heating coils, the electrically-insulated heating coils being positioned in the shell, such that naphtha submerges the electrically-insulated heating coils during heating of the naphtha in the vaporizing chamber;
a vapor stream output port in flow communication with the vaporizer chamber and positioned to receive the vapor portion;
a liquid stream output port in flow communication with the vaporizer chamber and positioned to receive the liquid portion;
a vapor conduit in flow communication with the vapor stream output port;
a liquid conduit in flow communication with the liquid stream output port; and
a liquid stream valve in flow communication with the liquid conduit, the liquid stream valve having an open position allowing the liquid portion to flow from the liquid stream output port and through the liquid conduit and a closed position preventing the liquid portion from flowing through the liquid conduit.

10. The system according to claim 9, further comprising one or more of:
a blow down in flow communication with the liquid conduit, and positioned to remove heavy components of the liquid portion from the vapor-liquid separator;
a steam injector in flow communication with the liquid conduit and positioned to inject steam into the liquid conduit to vaporize at least a portion of the liquid portion in the liquid conduit to provide steam and vaporized liquid;
a steam conduit in flow communication with the steam injector and the vapor conduit and configured to supply the steam and vaporized liquid to the vapor conduit; or
a stirring device positioned inside the shell to stir the naphtha during heating of the naphtha.

11. The system according to any of claims 1-4, further comprising:
a shell defining a vaporizer chamber and positioned to receive the feed stream;
a plurality of heating tubes positioned in the vaporizer chamber, such that the shell and the heating tubes at least partially define there between one or more outer fluid passages to receive a heat transfer fluid, each of the plurality of heating tubes comprising a tubular wall having an outer surface positioned for contact with the heat transfer fluid and an inner surface positioned for contact with a portion of the feed stream; and
a plurality of heating elements positioned to heat the feed stream, one or more of the plurality of heating elements being electrically-powered and positioned in one or more of the plurality of heating tubes and at least partially defining, with an interior surface of the one or more of the plurality of heating tubes, feed passages positioned to receive a portion of the feed stream there through and heat the portion of the feed stream, the feed stream being heated by the heat transfer fluid through the tubular walls of the heating tubes and the heating elements while flowing through the feed passages.

12. The system according to claim 11, wherein one or more of:
one or more of the plurality of heating elements are electrically-insulated and define an outer heating element surface, each of the feed passages defining an annular cross-section defined by the outer heating element surface and an inner surface of a corresponding one of the plurality of heating tubes;
or
the heat transfer fluid comprises one or more of steam or a heating medium comprising one or more of hot oil or flue gas, and flow of the heat transfer fluid through the one or more outer fluid passages heats the inner surfaces of the one or more heating tubes.

13. The system according to claim 11 or claim 12, wherein one or more of:
one or more of the plurality of heating tubes include a first end and a second end defining a heating tube length, and one or more of the heating tubes including therein a first heating element positioned at a first heating region along a first portion of the heating tube length and a second heating element positioned at a second heating region along a second portion of the heating tube length;
the first heating element is configured to provide a first heat flux and the second heating element is configured to provide a second heat flux less than the first heat flux, the first heat flux for heating the liquid hydrocarbons of the hydrocarbon feed stream to provide combined vapor and liquid hydrocarbons, and the second heat flux for heating the combined vapor and liquid hydrocarbons; or
the first heating element is configured to be powered by a first voltage and the second heating element is configured to be powered by a second voltage lower than the first voltage to vaporize the feed stream from a first end to a second end without overheating and arcing of the first heating element or the second heating element, and substantially uniform increase of temperature from the first end to the second end.

14. The system according to claim 11, wherein one or more of the plurality of heating tubes include a first end and a second end defining a heating tube length, and one or more of the plurality of heating tubes includes therein a first heating element providing a substantially uniform heat flux along substantially the heating tube length for heating the liquid hydrocarbons of the hydrocarbon feed stream to provide combined vapor and liquid hydrocarbons.

15. The system according to any of claims 1-4, wherein the flash device comprises:
a shell defining a heat transfer chamber;
a plurality of heat transfer tubes positioned in the shell, one of the shell or the plurality of heat transfer tubes being positioned to receive the feed stream and the other of the shell or the plurality of heat transfer tubes being positioned to receive a heat transfer medium, such that the heat transfer medium heats the feed stream, the heat transfer medium being devoid of flue gas from a convection section of a steam cracker and comprising one or more of steam, quench oil from a quench tower, or heat medium oil; and
a heating device comprising an electrically-powered heater and positioned to receive the pre-heated feed stream.

## Patentansprüche

1. Kohlenwasserstoff-Cracking-System, wobei das System umfasst:
a) eine Zufuhrleitung, die positioniert ist, um einen Zufuhrstrom einzuspeisen, der einen von einem Naphtha-Zufuhrstrom oder einem flüssigen Kohlenwasserstoff-Zufuhrstrom umfasst, wobei der eine von dem Naphtha-Zufuhrstrom oder dem flüssigen Kohlenwasserstoff-Zufuhrstrom von C2 bis C15 reichende Kohlenstoffzahlen umfasst;
b) eine Vorheizanordnung, umfassend einen elektrisch betriebenen Erhitzer, wobei die Vorheizanordnung in Strömungsverbindung mit der Zufuhrleitung steht und dazu konfiguriert ist, den Zufuhrstrom zu heizen, um i) einen vorgeheizten Zufuhrstrom, der einen oder mehrere von einem verdampften Teil des vorgeheizten Zufuhrstroms oder einem vorgeheizten flüssigen Kohlenwasserstoff-Zufuhrstrom umfasst, und ii) einen verbleibenden flüssigen Teil des Zufuhrstroms bereitzustellen;
c) eine Flash-Vorrichtung, die positioniert ist, um den vorgeheizten Zufuhrstrom aufzunehmen und einen oder mehrere des verdampften Teils des vorgeheizten Zufuhrstroms oder des vorgeheizten flüssigen Kohlenwasserstoff-Zufuhrstroms von dem verbleibenden flüssigen Teil des Zufuhrstroms zu trennen, um einen Flash-Vorrichtungs-Auslassstrom einzuspeisen;
d) eine Flüssigkeitsleitung, um mindestens einen Teil des verbleibenden flüssigen Teils des Zufuhrstroms zu entfernen;
e) einen Mischer zum Zugeben von überhitztem Verdünnungsdampf zu dem mindestens einen Teil des verbleibenden flüssigen Teils des Zufuhrstroms, um mindestens einen Teil des verbleibenden flüssigen Teils des Zufuhrstroms zu verdampfen, um einen Mischer-Auslassstrom einzuspeisen; und
f) einen elektrisch betriebenen Dampfcrackofen, der positioniert ist, um den Flash-Vorrichtungs-Auslassstrom und den Mischer-Auslassstrom aufzunehmen und den kombinierten Flash-Vorrichtungs-Auslassstrom und den Mischer-Auslassstrom zu erhitzen, um einen Produktstrom bereitzustellen, der gecrackte Kohlenwasserstoffe umfasst.

2. System nach Anspruch 1, wobei die Vorheizanordnung ferner eines oder mehrere von einem Dampferhitzer oder einem Wärmeübertragungsfluid umfasst, der/das positioniert ist, um den Zufuhrstrom zu erhitzen.

3. System nach Anspruch 1 oder Anspruch 2, wobei eines oder mehrere von:
dem Kohlenwasserstoff-Cracking-System ferner einen elektrisch betriebenen Verdünnungsdampferhitzer umfasst, der dazu konfiguriert ist, Verdünnungsdampf zu erhitzen, um erhitzten Verdünnungsdampf und eine Dampfleitung in Strömungsverbindung mit der Flash-Vorrichtung, um den erhitzten Verdünnungsdampf in die Flash-Vorrichtung einzuspeisen, bereitzustellen.

4. System nach einem der vorhergehenden Ansprüche, ferner umfassend:
einen Destillationsabschnitt in Strömungsverbindung mit dem Dampfcrackofen, wobei der Destillationsabschnitt dazu konfiguriert ist, gecrackte Kohlenwasserstoffe des Produktstroms zu trennen; und
eine Rückführleitung, die eine Strömungsverbindung zwischen dem Destillationsabschnitt und der Flash-Vorrichtung bereitstellt, um eines oder mehrere von Waschöl oder Quenchöl aus dem Destillationsabschnitt in die Flash-Vorrichtung einzuspeisen.

5. System nach einem der vorhergehenden Ansprüche, wobei die Flash-Vorrichtung ein Dampf-Flüssigkeits-Abscheider ist, der einen Flüssigkeitserhitzer in Strömungsverbindung mit dem Dampf-Flüssigkeits-Abscheider umfasst und positioniert ist, um ein Wärmeübertragungsfluid über das Wärmeübertragungsfluid zu erhitzen, das direkt mit Naphtha des Naphtha-Zufuhrstroms in Kontakt steht, um das Naphtha zu erhitzen, wobei der Flüssigkeitserhitzer elektrisch betrieben wird und das Wärmeübertragungsfluid einen zwischen etwa 20 Grad Celsius und etwa 550 Grad Celsius liegenden Arbeitsbereich aufweist; und eine Zirkulationsleitung, die eine Strömungsverbindung zwischen dem Flüssigkeitserhitzer und dem Dampf-Flüssigkeits-Abscheider bereitstellt, um das Wärmeübertragungsfluid zwischen dem Flüssigkeitserhitzer und dem Dampf-Flüssigkeits-Abscheider zu zirkulieren.

6. System nach Anspruch 5, wobei der Dampf-Flüssigkeits-Abscheider eines oder mehrere von einem oder mehreren Trennböden, einem oder mehreren regellosen Füllkörpern oder einer oder mehreren strukturierten Füllkörpern umfasst, die positioniert sind, um mindestens einen Teil des Zufuhrstroms aufzunehmen und den verdampften Teil von dem flüssigen Teil des mindestens einen Teils des Zufuhrstroms zu trennen, wobei der mindestens eine Teil des Zufuhrstroms und das Wärmeübertragungsfluid in den Dampf-Flüssigkeits-Abscheider an einem oder mehreren von oberhalb, unterhalb oder an dem einen oder mehreren von dem einen oder mehreren Trennböden, dem einen oder mehreren regellosen Füllkörpern oder den strukturierten Füllkörpern eingespeist werden.

7. System nach einem von Anspruch 5 oder Anspruch 6, wobei die Zirkulationsleitung eine Vielzahl von Eingangsstellen entlang der Zirkulationsleitung umfasst und positioniert ist, um eine Vielzahl von Zufuhrstromeingängen des Naphtha-Zufuhrstroms aufzunehmen.

8. System nach einem der Ansprüche 5-7, ferner umfassend eines oder mehrere von:
einer Mischvorrichtung in Strömungsverbindung mit der Zirkulationsleitung, wobei die Mischvorrichtung positioniert ist, um den Kontakt zwischen dem Zufuhrstrom und dem Wärmeübertragungsfluid zu verbessern, und umfassend eines oder mehrere von einem statischen Mischer, einem Impeller, einem Verteiler, einer Düse, einem Ejektor oder einer Mischpumpe;
einem Ejektor in Strömungsverbindung mit der Zirkulationsleitung, wobei der Ejektor positioniert ist, um das Wärmeübertragungsfluid durch die Zirkulationsleitung zu mischen und zu pumpen; oder
einem Injektor in Strömungsverbindung mit und stromaufwärts relativ zu dem Dampf-Flüssigkeits-Abscheider, wobei der Injektor dazu konfiguriert ist, Dampf in den Dampf-Flüssigkeits-Abscheider zu injizieren.

9. System nach einem der Ansprüche 1-4, wobei die Flash-Vorrichtung ein Dampf-Flüssigkeits-Abscheider ist, umfassend:
einen Mantel, der mindestens teilweise eine Verdampfungskammer definiert, die positioniert ist, um den Zufuhrstrom aufzunehmen;
einen Zufuhrstrom-Eingangsanschluss in Strömungsverbindung mit dem Mantel, um den Zufuhrstrom in die Verdampfungskammer einzuspeisen;
ein Heizelement, das in einem Inneren der Verdampfungskammer positioniert ist, um mindestens teilweise in Naphtha eingetaucht zu sein, wobei das Heizelement elektrisch isolierte Heizschlangen umfasst, wobei die elektrisch isolierten Heizschlangen in dem Mantel positioniert sind, sodass Naphtha die elektrisch isolierten Heizschlangen während des Erhitzens des Naphthas in der Verdampfungskammer eintaucht;
einen Dampfstrom-Ausgangsanschluss, der in Strömungsverbindung mit der Verdampferkammer steht und positioniert ist, um den Dampfteil aufzunehmen;
einen Flüssigkeitsstrom-Ausgangsanschluss, der in Strömungsverbindung mit der Verdampferkammer steht und positioniert ist, um den flüssigen Teil aufzunehmen;
eine Dampfleitung in Strömungsverbindung mit dem Dampfstrom-Ausgangsanschluss;
eine Flüssigkeitsleitung in Strömungsverbindung mit dem Flüssigkeitsstrom-Ausgangsanschluss; und
ein Flüssigkeitsstromventil in Strömungsverbindung mit der Flüssigkeitsleitung, wobei das Flüssigkeitsstromventil eine offene Position, die ermöglicht, dass der flüssige Teil aus dem Flüssigkeitsstrom-Ausgangsanschluss und durch die Flüssigkeitsleitung fließt, und eine geschlossene Position, die verhindert, dass der flüssige Teil durch die Flüssigkeitsleitung fließt, aufweist.

10. System nach Anspruch 9, ferner umfassend eines oder mehrere von:
einem Blow-Down, das in Strömungsverbindung mit der Flüssigkeitsleitung steht und positioniert ist, um schwere Komponenten des flüssigen Teils aus dem Dampf-Flüssigkeits-Abscheider zu entfernen;
einem Dampfinjektor, der in Strömungsverbindung mit der Flüssigkeitsleitung steht und positioniert ist, um Dampf in die Flüssigkeitsleitung zu injizieren, um mindestens einen Teil des flüssigen Teils in der Flüssigkeitsleitung zu verdampfen, um Dampf und verdampfte Flüssigkeit bereitzustellen;
einer Dampfleitung, die in Strömungsverbindung mit dem Dampfinjektor und der Dampfleitung steht und dazu konfiguriert ist, den Dampf und die verdampfte Flüssigkeit in die Dampfleitung einzuspeisen; oder
einer Rührvorrichtung, die innerhalb des Mantels positioniert ist, um das Naphtha während des Erhitzens des Naphthas umzurühren.

11. System nach einem der Ansprüche 1-4, ferner umfassend:
einen Mantel, der eine Verdampferkammer definiert und positioniert ist, um den Zufuhrstrom aufzunehmen;
eine Vielzahl von Heizrohren, die in der Verdampferkammer positioniert sind, sodass der Mantel und die Heizrohre mindestens teilweise dazwischen einen oder mehrere äußere Fluiddurchgänge zum Aufnehmen eines Wärmeübertragungsfluids definieren, wobei jedes der Vielzahl von Heizrohren eine rohrförmige Wand mit einer Außenfläche, die für den Kontakt mit den Wärmeübertragungsfluid positioniert ist, und einer Innenfläche, die für den Kontakt mit einem Teil des Zufuhrstroms positioniert ist, umfasst; und
eine Vielzahl von Heizelementen, die positioniert sind, um den Zufuhrstrom zu erhitzen, wobei eines oder mehrere der Vielzahl von Heizelementen elektrisch betrieben und in einem oder mehreren der Vielzahl von Heizrohren positioniert sind und mindestens teilweise, mit einer Innenfläche des einen oder mehreren der Vielzahl von Heizrohren, Zufuhrdurchgänge definieren, die positioniert sind, um einen Teil des Zufuhrstroms dort hindurch aufzunehmen und den Teil des Zufuhrstroms zu erhitzen, wobei der Zufuhrstrom von dem Wärmeübertragungsfluid durch die rohrförmigen Wände der Heizrohre und die Heizelemente erhitzt wird, während er durch die Zufuhrdurchgänge strömt.

12. System nach Anspruch 11, wobei eines oder mehrere von:
einem oder mehreren der Vielzahl von Heizelementen elektrisch isoliert sind und eine äußere Heizelementfläche definieren, wobei jeder der Zufuhrdurchgänge einen ringförmigen Querschnitt definiert, der von der äußeren Heizelementfläche und einer Innenfläche eines entsprechenden aus der Vielzahl von Heizrohren definiert ist;
oder
das Wärmeübertragungsfluid eines oder mehrere von Dampf oder einem Heizmedium umfasst, das eines oder mehrere von heißem Öl oder Rauchgas umfasst, und ein Strom des Wärmeübertragungsfluids durch den einen oder die mehreren äußeren Fluiddurchgänge die Innenflächen des einen oder mehrerer Heizrohre erhitzt.

13. System nach Anspruch 11 oder Anspruch 12, wobei eines oder mehrere von:
einem oder mehreren der Vielzahl von Heizrohren ein erstes Ende und ein zweites Ende, die eine Heizrohrlänge definieren, beinhalten und ein oder mehreren der Heizrohre darin ein erstes Heizelement, das an einem ersten Heizbereich entlang eines ersten Teils der Heizrohrlänge positioniert ist, und ein zweites Heizelement, das an einem zweiten Heizbereich entlang eines zweiten Teils der Heizrohrlänge positioniert ist, beinhalten;
das erste Heizelement dazu konfiguriert ist, einen ersten Wärmefluss bereitzustellen, und das zweite Heizelement dazu konfiguriert ist, einen zweiten Wärmefluss bereitzustellen, der weniger als der erste Wärmefluss ist, der erste Wärmefluss zum Erhitzen der flüssigen Kohlenwasserstoffe des Kohlenwasserstoff-Zufuhrstroms dient, um kombinierte dampfförmige und flüssige Kohlenwasserstoffe bereitzustellen, und der zweite Wärmefluss zum Erhitzen der kombinierten dampfförmigen und flüssigen Kohlenwasserstoffe dient; oder
das erste Heizelement dazu konfiguriert ist, von einer ersten Spannung betrieben zu werden, und das zweite Heizelement dazu konfiguriert ist, von einer zweiten Spannung betrieben zu werden, die niedriger als die erste Spannung ist, um den Zufuhrstrom von einem ersten Ende zu einem zweiten Ende zu verdampfen, ohne Überhitzung und Lichtbogenbildung des ersten Heizelements oder des zweiten Heizelements, und im Wesentlichen gleichmäßige Temperaturerhöhung von dem ersten Ende zu dem zweiten Ende.

14. System nach Anspruch 11, wobei eines oder mehrere der Vielzahl von Heizrohren ein erstes Ende und ein zweites Ende, die eine Heizrohrlänge definieren, beinhalten und eines oder mehrere der Vielzahl von Heizrohren darin ein erstes Heizelement beinhalten, das einen im Wesentlichen gleichmäßigen Wärmefluss entlang im Wesentlichen der Heizrohrlänge bereitstellt, um die flüssigen Kohlenwasserstoffe des Kohlenwasserstoff-Zufuhrstroms zu erhitzen, um kombinierte dampfförmige und flüssige Kohlenwasserstoffe bereitzustellen.

15. System nach einem der Ansprüche 1-4, wobei die Flash-Vorrichtung umfasst:
einen Mantel, die eine Wärmeübertragungskammer definiert;
eine Vielzahl von Wärmeübertragungsrohren, die in dem Mantel positioniert sind, wobei eines von dem Mantel oder der Vielzahl von Wärmeübertragungsrohren positioniert ist, um den Zufuhrstrom aufzunehmen, und das andere von dem Mantel oder der Vielzahl von Wärmeübertragungsrohren positioniert ist, um ein Wärmeübertragungsmedium aufzunehmen, sodass das Wärmeübertragungsmedium den Zufuhrstrom erhitzt, wobei das Wärmeübertragungsmedium frei von Rauchgas aus einem Konvektionsabschnitt eines Dampfcrackers ist und eines oder mehrere von Dampf, Quenchöl aus einem Quenchturm oder Hitzemediumöl umfasst; und
eine Heizvorrichtung, die einen elektrisch betriebenen Erhitzer umfasst und positioniert ist, um den vorgeheizten Zufuhrstrom aufzunehmen.

## Revendications

1. Système de craquage d'hydrocarbures, le système comprenant :
a) un conduit d'alimentation positionné de manière à délivrer un flux d'alimentation comprenant un flux parmi un flux d'alimentation en naphta ou un flux d'alimentation en hydrocarbures liquides, un flux parmi le flux d'alimentation en naphta ou le flux d'alimentation en hydrocarbures liquides comprenant des nombres de carbone allant de C2 à C15 ;
b) un ensemble de préchauffage comprenant un réchauffeur à alimentation électrique, ledit ensemble de préchauffage étant en communication fluidique avec le conduit d'alimentation et étant conçu pour chauffer le flux d'alimentation de manière à fournir i) un flux d'alimentation préchauffé comprenant un ou plusieurs éléments parmi une partie vaporisée du flux d'alimentation préchauffé ou un flux d'alimentation en hydrocarbures liquides préchauffés, et ii) une partie liquide restante du flux d'alimentation ;
c) un dispositif flash positionné de manière à recevoir le flux d'alimentation préchauffé et séparer un ou plusieurs éléments parmi la partie vaporisée du flux d'alimentation préchauffé ou du flux d'alimentation en hydrocarbures liquides préchauffés de la partie liquide restante du flux d'alimentation pour fournir un flux de sortie du dispositif flash ;
d) un conduit de liquide destiné à éliminer au moins une partie de la partie liquide restante du flux d'alimentation ;
e) un mélangeur destiné à ajouter de la vapeur de dilution surchauffée à au moins une partie de la partie liquide restante du flux d'alimentation de manière à vaporiser au moins une partie de la partie liquide restante du flux d'alimentation afin de délivrer un flux de sortie de mélangeur ; et
f) un four de vapocraquage à alimentation électrique positionné de manière à recevoir le flux de sortie du dispositif flash et le flux de sortie du mélangeur, et à chauffer le flux de sortie du dispositif flash et le flux de sortie du mélangeur combinés de manière à fournir un flux de produit comprenant des hydrocarbures craqués.

2. Système selon la revendication 1, ledit ensemble de préchauffage comprenant en outre un ou plusieurs éléments parmi un réchauffeur de vapeur ou un fluide de transfert de chaleur positionné de manière à chauffer le flux d'alimentation.

3. Système selon la revendication 1 ou la revendication 2, un ou plusieurs cas étant satisfaits parmi :
le système de craquage d'hydrocarbures comprend en outre un réchauffeur de vapeur de dilution à alimentation électrique conçu pour chauffer la vapeur de dilution afin de fournir de la vapeur de dilution chauffée et un conduit de vapeur en communication fluidique avec le dispositif flash pour délivrer la vapeur de dilution chauffée au dispositif flash.

4. Système selon l'une quelconque des revendications précédentes, comprenant en outre :
une section de distillation en communication fluidique avec le four de vapocraquage, la section de distillation étant conçue pour séparer les hydrocarbures craqués du flux de produit ; et
un conduit de recyclage assurant une communication fluidique entre la section de distillation et le dispositif flash de manière à fournir une ou plusieurs huiles de lavage ou huiles de trempe de la section de distillation au dispositif flash.

5. Système selon l'une quelconque des revendications précédentes, ledit dispositif flash étant un séparateur vapeur-liquide comprenant un réchauffeur de liquide en communication fluidique avec le séparateur vapeur-liquide et positionné de manière à chauffer un fluide de transfert de chaleur par l'intermédiaire du fluide de transfert de chaleur en contact direct avec le naphta du flux d'alimentation de naphta de manière à chauffer le naphta, ledit réchauffeur de liquide étant alimenté électriquement et ledit fluide de transfert de chaleur présentant une plage de fonctionnement comprise entre environ 20 degrés C et environ 550 degrés C ; et un conduit de circulation fournissant une communication fluidique entre le réchauffeur de liquide et le séparateur vapeur-liquide de manière à faire circuler le fluide de transfert de chaleur entre le réchauffeur de liquide et le séparateur vapeur-liquide.

6. Système selon la revendication 5, ledit séparateur vapeur-liquide comprenant un ou plusieurs éléments parmi un ou plusieurs plateaux de séparation, un ou plusieurs garnissages aléatoires, ou un ou plusieurs garnissages structurés positionnés de manière à recevoir au moins une partie du flux d'alimentation et à séparer la partie vaporisée de la partie liquide de ladite au moins une partie du flux d'alimentation, ladite au moins une partie du flux d'alimentation et ledit fluide de transfert de chaleur étant délivrés au séparateur vapeur-liquide au niveau d'un ou plusieurs endroits parmi au-dessus, en dessous ou au niveau desdits un ou plusieurs éléments parmi lesdits un ou plusieurs plateaux de séparation, lesdits un ou plusieurs garnissages aléatoires, ou lesdits garnissages structurés.

7. Système selon l'une quelconque de la revendication 5 ou de la revendication 6, ledit conduit de circulation comprenant une pluralité d'emplacements d'entrée le long du conduit de circulation et positionné pour recevoir une pluralité d'entrées de flux d'alimentation du flux d'alimentation de naphta.

8. Système selon l'une quelconque des revendications 5 à 7, comprenant en outre un ou plusieurs éléments parmi :
un dispositif de mélange en communication fluidique avec le conduit de circulation, le dispositif de mélange étant positionné de manière à améliorer le contact entre le flux d'alimentation et le fluide de transfert de chaleur,
et comprenant un ou plusieurs éléments parmi un mélangeur statique, une turbine, un distributeur, une buse, un éjecteur ou une pompe de mélange ;
un éjecteur en communication fluidique avec le conduit de circulation, l'éjecteur étant positionné de manière à mélanger et pomper le fluide de transfert de chaleur à travers le conduit de circulation ; ou
un injecteur en communication fluidique avec et en amont par rapport au séparateur vapeur-liquide, l'injecteur étant conçu pour injecter de la vapeur dans le séparateur vapeur-liquide.

9. Système selon l'une quelconque des revendications 1 à 4, ledit dispositif flash étant un séparateur vapeur-liquide comprenant :
une enveloppe définissant au moins partiellement une chambre de vaporisation positionnée de manière à recevoir le flux d'alimentation ;
un orifice d'entrée de flux d'alimentation en communication fluidique avec l'enveloppe de manière à délivrer le flux d'alimentation dans la chambre de vaporisation ;
un élément chauffant positionné à l'intérieur de la chambre de vaporisation de manière à être au moins partiellement immergé dans du naphta, l'élément chauffant comprenant des serpentins chauffants isolés électriquement, les serpentins chauffants isolés électriquement étant positionnés dans l'enveloppe, de sorte que le naphta immerge les serpentins chauffants isolés électriquement pendant le chauffage du naphta dans la chambre de vaporisation ;
un orifice de sortie de flux de vapeur en communication fluidique avec la chambre de vaporisation et positionné de manière à recevoir la partie vapeur ;
un orifice de sortie de flux de liquide en communication fluidique avec la chambre de vaporisation et positionné de manière à recevoir la partie liquide ;
un conduit de vapeur en communication fluidique avec l'orifice de sortie de flux de vapeur ;
un conduit de liquide en communication fluidique avec l'orifice de sortie de flux de liquide ; et
une vanne de flux de liquide en communication fluidique avec le conduit de liquide, la vanne de flux de liquide présentant une position ouverte permettant à la partie liquide de s'écouler de l'orifice de sortie de flux de liquide et à travers le conduit de liquide et une position fermée empêchant la partie liquide de s'écouler à travers le conduit de liquide.

10. Système selon la revendication 9, comprenant en outre un ou plusieurs éléments parmi :
un purgeur en communication fluidique avec le conduit de liquide, et positionné de manière à éliminer les composants lourds de la partie liquide du séparateur vapeur-liquide ;
un injecteur de vapeur en communication fluidique avec le conduit de liquide et positionné de manière à injecter de la vapeur dans le conduit de liquide afin de vaporiser au moins une partie de la partie liquide dans le conduit de liquide pour fournir de la vapeur et du liquide vaporisé ;
un conduit de vapeur en communication fluidique avec l'injecteur de vapeur et le conduit de vapeur et conçu pour délivrer la vapeur et le liquide vaporisé au conduit de vapeur ; ou
un dispositif d'agitation positionné à l'intérieur de l'enveloppe de manière à agiter le naphta pendant le chauffage du naphta.

11. Système selon l'une quelconque des revendications 1 à 4, comprenant en outre :
une enveloppe définissant une chambre de vaporisation et positionnée de manière à recevoir le flux d'alimentation ;
une pluralité de tubes chauffants positionnés dans la chambre de vaporisation, de sorte que l'enveloppe et les tubes chauffants y définissent au moins partiellement entre un ou plusieurs passages de fluide externes pour recevoir un fluide de transfert de chaleur, chacun de la pluralité de tubes chauffants comprenant une paroi tubulaire possédant une surface externe positionnée pour un contact avec le fluide de transfert de chaleur et une surface interne positionnée pour un contact avec une partie du flux d'alimentation ; et
une pluralité d'éléments chauffants positionnés de manière à chauffer le flux d'alimentation, un ou plusieurs de la pluralité d'éléments chauffants étant alimentés électriquement et positionnés dans un ou plusieurs de la pluralité de tubes chauffants et définissant au moins partiellement, avec une surface intérieure desdits un ou plusieurs de la pluralité de tubes chauffants, des passages d'alimentation positionnés de manière à recevoir une partie du flux d'alimentation en leur travers et chauffer la partie du flux d'alimentation, le flux d'alimentation étant chauffé par le fluide de transfert de chaleur à travers les parois tubulaires des tubes chauffants et des éléments chauffants tout en s'écoulant à travers les passages d'alimentation.

12. Système selon la revendication 11, un ou plusieurs cas étant satisfaits parmi :
un ou plusieurs de la pluralité d'éléments chauffants sont isolés électriquement et définissent une surface extérieure d'élément chauffant, chacun des passages d'alimentation définissant une section transversale annulaire définie par la surface extérieure d'élément chauffant et une surface intérieure d'un tube correspondant parmi la pluralité de tubes chauffants ;
ou
le fluide de transfert de chaleur comprend un ou plusieurs éléments parmi de la vapeur ou un milieu chauffant comprenant un ou plusieurs éléments parmi de l'huile chaude ou des gaz de combustion, et l'écoulement du fluide de transfert de chaleur à travers lesdits un ou plusieurs passages de fluide externes chauffe les surfaces intérieures desdits un ou plusieurs tubes chauffants.

13. Système selon la revendication 11 ou la revendication 12, un ou plusieurs cas étant satisfaits parmi :
un ou plusieurs de la pluralité de tubes chauffants comprennent une première extrémité et une seconde extrémité définissant une longueur de tube chauffant, et un ou plusieurs des tubes chauffants comprenant en leur sein un premier élément chauffant positionné au niveau d'une première zone chauffante le long d'une première partie de la longueur de tube chauffant et un second élément chauffant positionné au niveau d'une seconde zone chauffante le long d'une seconde partie de la longueur de tube chauffant ;
le premier élément chauffant est conçu pour fournir un premier flux thermique et le second élément chauffant est conçu pour fournir un second flux thermique inférieur au premier flux thermique, le premier flux thermique pour chauffer les hydrocarbures liquides du flux d'alimentation en hydrocarbures de manière à fournir une combinaison de vapeur et d'hydrocarbures liquides, et le second flux thermique pour chauffer la combinaison de vapeur et d'hydrocarbures liquides ; ou
le premier élément chauffant est conçu pour être alimenté par une première tension et le second élément chauffant est conçu pour être alimenté par une seconde tension inférieure à la première tension de manière à vaporiser le flux d'alimentation d'une première extrémité à une seconde extrémité sans surchauffe et formation d'arc du premier élément chauffant ou du second élément chauffant, et une augmentation sensiblement uniforme de la température de la première extrémité à la seconde extrémité.

14. Système selon la revendication 11, un ou plusieurs de la pluralité de tubes chauffants comprenant une première extrémité et une seconde extrémité définissant une longueur de tube chauffant, et un ou plusieurs de la pluralité de tubes chauffants comprenant en leur sein un premier élément chauffant fournissant un flux thermique sensiblement uniforme le long de la longueur de tube chauffant de manière à chauffer les hydrocarbures liquides du flux d'alimentation en hydrocarbures afin de fournir une vapeur et des hydrocarbures liquides combinés.

15. Système selon l'une quelconque des revendications 1 à 4, ledit dispositif flash comprenant :
une enveloppe définissant une chambre de transfert de chaleur ;
une pluralité de tubes de transfert de chaleur positionnés dans l'enveloppe, un élément parmi l'enveloppe ou la pluralité de tubes de transfert de chaleur étant positionné de manière à recevoir le flux d'alimentation et l'autre élément parmi l'enveloppe ou la pluralité de tubes de transfert de chaleur étant positionnée de manière à recevoir un milieu de transfert de chaleur, de sorte que le milieu de transfert de chaleur chauffe le flux d'alimentation, le milieu de transfert de chaleur étant dépourvu de gaz de combustion provenant d'une section de convection d'un vapocraqueur et comprenant un ou plusieurs éléments parmi de la vapeur, de l'huile de trempe provenant d'une tour de trempe ou de l'huile de milieu thermique ; et
un dispositif de chauffage comprenant un réchauffeur à alimentation électrique et positionné de manière à recevoir le flux d'alimentation préchauffé.
